(19) Europäisches Patentamt / European Patent Office / Office européen des brevets

(11) **EP 4 564 943 A1**

(12) **EUROPEAN PATENT APPLICATION**
published in accordance with Art. 153(4) EPC

(43) Date of publication:
04.06.2025 Bulletin 2025/23

(21) Application number: 23844921.9

(22) Date of filing: 23.04.2023

(51) International Patent Classification (IPC):
*H04W 64/00* (2009.01)

(52) Cooperative Patent Classification (CPC):
H04L 43/0864; H04W 24/08; H04W 64/00

(86) International application number:
PCT/CN2023/090026

(87) International publication number:
WO 2024/021705 (01.02.2024 Gazette 2024/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.07.2022 CN 202210901714

(71) Applicants:
• Huawei Technologies Co., Ltd.
 Shenzhen, Guangdong 518129 (CN)
• Peng Cheng Laboratory
 Shenzhen, Guangdong 518000 (CN)

(72) Inventors:
• ZHANG, Jingwei
 Shenzhen, Guangdong 518129 (CN)
• CHEN, Ying
 Shenzhen, Guangdong 518129 (CN)
• QIAO, Yunfei
 Shenzhen, Guangdong 518129 (CN)
• TIE, Xiaolei
 Shenzhen, Guangdong 518129 (CN)

(74) Representative: Thun, Clemens
 Mitscherlich PartmbB
 Patent- und Rechtsanwälte
 Karlstraße 7
 80333 München (DE)

(54) **POSITIONING METHOD AND RELATED APPARATUS**

(57) This application provides a positioning method and a related apparatus. The method includes: obtaining first information and second information, where the first information includes information about a first time difference, the first time difference includes a time difference between receiving and sending at least two signals by a terminal device, the second information includes information about a second time difference, the second time difference includes a time difference between receiving and sending the at least two signals by a first network device, the at least two signals include any two signals that are transmitted between the terminal device and the first network device in opposite directions at different times, and transmission resources consumed by the at least two signals are fewer than transmission resources consumed by a PRS and an SRS; determining, based on the first information and the second information, a first RTT corresponding to the terminal device; and positioning the terminal device. In the method, the RTT between the terminal device and the network device can be measured based on the obtained time difference between receiving and sending the at least two signals by the terminal device and the obtained time difference between receiving and sending the at least two signals by the network device, so that the terminal device is positioned.

FIG. 3

## Description

This application claims priority to Chinese Patent Application No. 202210901714.4, filed with the China National Intellectual Property Administration on July 28, 2022 and entitled "POSITIONING METHOD AND RELATED APPARATUS", which is incorporated herein by reference in its entirety.

## TECHNICAL FIELD

This application relates to the field of communication technologies, and in particular, to a positioning method and a related apparatus.

## BACKGROUND

With development of information technologies, modern communication systems impose more urgent requirements on communication efficiency, mobility, diversity, and the like. Currently, in some important application scenarios, for example, in the field of space communication, aviation communication, maritime communication, and military communication, non-terrestrial network (non-terrestrial network, NTN) communication represented by non-terrestrial devices such as satellites, unmanned aerial vehicles, and high-altitude platforms plays an irreplaceable role.

Satellite communication is used as an example. In the satellite communication, when a satellite provides a communication service, a location of a terminal device usually needs to be known. Currently, a terrestrial terminal device may obtain a location of the terminal device by using a global navigation satellite system (global navigation satellite system, GNSS), and report the location to a network side. However, location information reported by the terminal device may be tampered with or affected by interference, resulting in a large error.

Therefore, how the network side positions the terrestrial terminal device or verifies the location information reported by the terrestrial terminal device becomes an urgent technical problem to be resolved.

## SUMMARY

Embodiments of this application provide a positioning method and a related apparatus, to implement positioning on a terminal device by a network side in satellite communication based on a single satellite.

According to a first aspect, an embodiment of this application provides a positioning method, and the method includes:

obtaining first information and second information, where the first information includes information about a first time difference, the first time difference includes a time difference between receiving and sending at least two signals by a terminal device, the second information includes information about a second time difference, the second time difference includes a time difference between receiving and sending the at least two signals by a first network device, the at least two signals include any two signals that are transmitted between the terminal device and the first network device in opposite directions at different times, transmission resources consumed by the at least two signals are fewer than transmission resources consumed by a positioning reference signal PRS and a sounding reference signal SRS, and the first network device is a network device corresponding to a first non-terrestrial device; determining, based on the first information and the second information, a first round trip time RTT corresponding to the terminal device; and positioning the terminal device based on the first RTT.

In this embodiment of this application, the positioning method is provided. A network side device obtains the first information and the second information, determines, based on the first information and the second information, the first round trip time (round trip time, RTT) corresponding to the terminal device, and then positions the terminal device based on the first RTT. The obtained first information includes the information about the time difference between receiving and sending the at least two signals by the terminal device, the obtained second information includes the information about the time difference between receiving and sending the at least two signals by the first network device, the first network device is the network device corresponding to the first non-terrestrial device, and the at least two signals include the any two signals that are transmitted between the terminal device and the first network device in the opposite directions at different times. In addition, the transmission resources consumed by the at least two signals are fewer than the transmission resources consumed by the positioning reference signal (positioning reference signal, PRS) and the sounding reference signal (sounding reference signaling, SRS). According to this embodiment of this application, based on the method for positioning a terminal by a single non-terrestrial device, the time difference between receiving and sending the at least two signals by the terminal device and the time difference between receiving and sending the at least two signals by the network device can be obtained, and the RTT between the terminal device and the network device can be measured, so that the terminal device is positioned.

In addition, in comparison with measuring the RTT between the terminal device and the network device based on receiving and sending of the PRS and the SRS, in this embodiment of this application, the RTT between the terminal device and the network device is measured based on receiving and sending of the at least two signals. In this way, related positioning resources do not need to be specially configured for positioning signals such as the PRS and the SRS, signal configuration is simpler and more flexible, positioning complexity is low, the transmission resources consumed by the at least two signals are fewer than the transmission resources consumed by the PRS and the SRS, a positioning delay is reduced, signaling overheads of signal transmission and occupation of time-frequency resources are reduced, and positioning efficiency is improved.

In a possible implementation, the first time difference satisfies at least one of the following:
a time difference interval range corresponding to the first time difference is greater than a first interval range, and a time difference resolution corresponding to the first time difference is greater than a first threshold.

In this implementation of this application, a possible specific implementation of the first time difference is provided. Specifically, the time difference interval range corresponding to the obtained first time difference is greater than the first interval range, and/or the time difference resolution corresponding to the obtained first time difference is greater than the first threshold. It may be understood as that the first interval range may be a time difference interval range corresponding to a time difference between receiving and sending the PRS and the SRS, and the first threshold may be a time difference resolution corresponding to the time difference between receiving and sending the PRS and the SRS. In this case, an allowed interval range of the time difference between receiving and sending the at least two signals is greater than an allowed interval range of the time difference between receiving and sending the PRS and the SRS, and an allowed resolution of the time difference between receiving and sending the at least two signals is also greater than an allowed resolution of the time difference between receiving and sending the PRS and the SRS. It may also be understood as that the first interval range and/or the first threshold may be specified in a protocol or preconfigured, so that the allowed interval range of the time difference between receiving and sending the at least two signals is greater than the allowed interval range of the time difference between receiving and sending the PRS and the SRS, and the allowed resolution of the time difference between receiving and sending the at least two signals is also greater than the allowed resolution of the time difference between receiving and sending the PRS and the SRS. According to this embodiment of this application, content of the time difference interval range and the time difference resolution of the obtained first time difference is added, and the time difference interval range and the time difference resolution that correspond to the time difference between receiving and sending the at least two signals are extended, so that receiving and sending of the at least two signals within a larger time difference range and a larger resolution range are allowed. In addition, a quantity of bits occupied by the time difference between receiving and sending the at least two signals is also reduced.

In a possible implementation, the first information further includes at least one of the following:
slot information corresponding to the at least two signals, and orbital height information corresponding to the first non-terrestrial device.

In this implementation of this application, a possible specific implementation of the first information is provided. Specifically, the obtained first information further includes the slot information corresponding to the at least two signals, and/or the orbital height information corresponding to the first non-terrestrial device. It may be understood as that, when the first time difference between receiving and sending the at least two signals is obtained, the slot information corresponding to a quantity of radio frames, subframes, slots, or the like in the at least two signals may be removed, and the slot information corresponding to the at least two signals is separately stored in the first information. In this way, the first time difference can be kept within a small interval range, so that receiving and sending of the at least two signals within a larger time difference range and a larger resolution range can be allowed. When the first time difference between receiving and sending the at least two signals is obtained, information about a distance between the first non-terrestrial device and any reference point may be removed. Specifically, the information about the distance may be the orbital height information corresponding to the first non-terrestrial device. The orbital height information corresponding to the first non-terrestrial device is separately stored in the first information. In this way, the first time difference can be kept within a small interval range, so that receiving and sending of the at least two signals within a larger time difference range and a larger resolution range can be allowed. According to this embodiment of this application, the slot information corresponding to the at least two signals and/or the orbital height information corresponding to the first non-terrestrial device are/is separately stored in the first information. In this way, the first time difference can be kept within a small interval range, so that receiving and sending of the at least two signals within a larger time difference range and a larger resolution range can be allowed.

In a possible implementation, the at least two signals include two or more of a first message Msg1, a second message Msg2, a third message Msg3, and a fourth message Msg4 in a four-step random access procedure; or the at least two signals include a first message MsgA and a second message MsgB in a two-step random access procedure.

In this implementation of this application, a possible specific implementation of the at least two signals is provided. Specifically, the RTT between the terminal device and the network device is measured in the random access procedure or before and after authentication starts, that is, based on receiving and sending of the at least two signals. In this case, the at least two signals may include two or more of the first message Msg1, the second message Msg2, the third message Msg3, and the fourth message Msg4 in the four-step random access procedure; or the at least two signals may include the first message MsgA and the second message MsgB in the two-step random access procedure. According to this embodiment of this application, any two or more messages in the two-step random access procedure or the four-step random access procedure are received and sent, to measure the RTT between the terminal device and the network device. In this way, the network side device does not need to additionally configure related information for the at least two signals. In other words, the related information does not need to be additionally configured to indicate the terminal device to record and report the first time difference between receiving and sending the at least two signals, so that the transmission resources consumed by the at least two signals are further reduced. This reduces a positioning delay, reduces signaling overheads of signal transmission and occupation of time-frequency resources, and improves positioning efficiency.

In a possible implementation, the at least two signals include a channel state information-reference signal CSI-RS and a feedback signal corresponding to the CSI-RS.

In this implementation of this application, a possible specific implementation of the at least two signals is provided. Specifically, the at least two signals include the channel state information-reference signal (channel state information-reference signal, CSI-RS) and the feedback signal corresponding to the CSI-RS. According to this embodiment of this application, the RTT measurement is bound to the CSI-RS and the feedback signal corresponding to the CSI-RS, and the RTT between the terminal device and the network device is measured based on receiving and sending of the CSI-RS and the feedback signal corresponding to the CSI-RS. In this way, the network side device does not need to additionally configure related information for the at least two signals. In other words, the related information does not need to be additionally configured to indicate the terminal device to record and report the first time difference between receiving and sending the at least two signals, so that the transmission resources consumed by the at least two signals are further reduced. This reduces a positioning delay, reduces signaling overheads of signal transmission and occupation of time-frequency resources, and improves positioning efficiency.

In a possible implementation, the method further includes:

obtaining third information, where the third information includes information about a third time difference, the third time difference includes a time difference between receiving and sending at least two signals by at least one second network device, the at least two signals include any two signals that are transmitted between the terminal device and the at least one second network device in opposite directions at different times, transmission resources consumed by the at least two signals are fewer than the transmission resources consumed by the positioning reference signal PRS and the sounding reference signal SRS, and the at least one second network device is a network device corresponding to at least one second non-terrestrial device; and

the determining, based on the first information and the second information, a first round trip time RTT corresponding to the terminal device includes: determining, based on the first information, the second information, and the third information, the first RTT corresponding to the terminal device.

In this implementation of this application, a possible specific implementation of determining the RTT is provided. Specifically, in addition to obtaining the first information and the second information, the network side device further obtains the third information, and determines, based on the first information, the second information, and the third information, the first RTT corresponding to the terminal device, where the first RTT is for positioning the terminal device. The obtained third information includes the information about the time difference between receiving and sending the at least two signals by the at least one second network device, the at least one second network device is a network device corresponding to the at least one second non-terrestrial device, and the at least two signals include the any two signals that are transmitted between the terminal device and the at least one second network device in the opposite directions at different times. In addition, the transmission resources consumed by the at least two signals are fewer than the transmission resources consumed by the PRS and the SRS. According to this embodiment of this application, based on the method for positioning the terminal by a plurality of non-terrestrial devices, time differences between receiving and sending of the at least two signals by the terminal device and a plurality of network devices can be obtained, and the RTTs between the terminal device and the plurality of network devices can be measured, so that the terminal device is positioned.

In addition, in comparison with measuring the RTT between the terminal device and the network device based on receiving and sending of the PRS and the SRS, in this embodiment of this application, the RTT between the terminal device and the network device is measured based on receiving and sending of the at least two signals. In this way, related positioning resources do not need to be specially configured for positioning signals such as the PRS and the SRS, signal configuration is simpler and more flexible, positioning complexity is low, the transmission resources consumed by the at least two signals are fewer than the transmission resources consumed by the PRS and the SRS, a positioning delay is reduced, signaling overheads of signal transmission and occupation of time-frequency resources are reduced, and positioning efficiency is improved.

In a possible implementation, the at least two signals include a first signal and a second signal, and the first signal and the second signal are two signals that are transmitted between the terminal device and the first network device in opposite directions at different times, where

the first time difference includes a time difference between receiving the first signal by the terminal device and sending the second signal by the terminal device, and the second time difference includes a time difference between sending the first signal by the first network device and receiving the second signal by the first network device; or
the first time difference includes a time difference between sending the first signal by the terminal device and receiving the second signal by the terminal device, and the second time difference includes a time difference between receiving the first signal by the first network device and sending the second signal by the first network device.

In this implementation of this application, a possible specific implementation of the at least two signals is provided. Specifically, the at least two signals may include the first signal and the second signal, and the first signal and the second signal are two signals that are transmitted between the terminal device and the first network device in opposite directions at different times. The first network device may send the first signal to the terminal device. Correspondingly, the terminal device receives the first signal sent by the first network device. Then, the terminal device sends the second signal to the first network device. Correspondingly, the first network device receives the second signal sent by the terminal device. In this case, the first time difference includes the time difference between receiving the first signal by the terminal device and sending the second signal by the terminal device, and the second time difference includes the time difference between sending the first signal by the first network device and receiving the second signal by the first network device. Alternatively, the terminal device may send the first signal to the first network device. Correspondingly, the first network device receives the first signal sent by the terminal device. Then, the first network device sends the second signal to the terminal device. Correspondingly, the terminal device receives the second signal sent by the first network device. In this case, the first time difference includes the time difference between sending the first signal by the terminal device and receiving the second signal by the terminal device, and the second time difference includes the time difference between receiving the first signal by the first network device and sending the second signal by the first network device. In this embodiment of this application, the RTT between the terminal device and the network device can be measured based on the time difference between receiving and sending the first signal and the second signal by the terminal device and the network device, so that the terminal device is positioned.

In a possible implementation, the at least two signals further include a third signal and a fourth signal, and the third signal, the fourth signal, the first signal, and the second signal are signals transmitted between the terminal device and the first network device at different times, where

the first time difference further includes a time difference between sending the third signal by the terminal device and receiving the fourth signal by the terminal device, and the second time difference further includes a time difference between receiving the third signal by the first network device and sending the fourth signal by the first network device; or
the first time difference further includes a time difference between receiving the third signal by the terminal device and sending the fourth signal by the terminal device, and the second time difference further includes a time difference between sending the third signal by the first network device and receiving the fourth signal by the first network device.

In this implementation of this application, a possible specific implementation of the at least two signals is provided. Specifically, in addition to the first signal and the second signal, the at least two signals may further include the third signal and the fourth signal, and the third signal and the fourth signal are two signals that are transmitted between the terminal device and the first network device in opposite directions at different times. The first network device may send the third signal to the terminal device. Correspondingly, the terminal device receives the third signal sent by the first network device. Then, the terminal device sends the fourth signal to the first network device. Correspondingly, the first network device receives the fourth signal sent by the terminal device. In this case, the first time difference includes the time difference between receiving the third signal by the terminal device and sending the fourth signal by the terminal device, and the second time difference includes the time difference between sending the third signal by the first network device and receiving the fourth signal by the first network device. Alternatively, the terminal device may send the third signal to the first network device. Correspondingly, the first network device receives the third signal sent by the terminal device. Then, the first network device sends the fourth signal to the terminal device. Correspondingly, the terminal device receives the fourth signal sent by the first network device. In this case, the first time difference includes the time difference between sending the third signal by the terminal device and receiving the fourth signal by the terminal device, and the second time difference includes the time difference between receiving the third signal by the first network device and sending the fourth signal by the first network device. In this embodiment of this application, the RTT between the terminal device and the network device can be measured based on the time difference between receiving and sending the first signal and the second signal by the terminal device and the network device, and the time difference between receiving and sending the third signal and the fourth signal by the terminal device and the network device, so that the terminal device is positioned.

In a possible implementation, the at least two signals further include a third signal, and the third signal, the first signal, and the second signal are signals transmitted between the terminal device and the first network device at different times, where

the first time difference further includes a time difference between sending the second signal by the terminal device and receiving the third signal by the terminal device, and the second time difference further includes a time difference between receiving the second signal by the first network device and sending the third signal by the first network device; or the first time difference further includes a time difference between receiving the second signal by the terminal device and sending the third signal by the terminal device, and the second time difference further includes a time difference between sending the second signal by the first network device and receiving the third signal by the first network device.

In this implementation of this application, a possible specific implementation of the at least two signals is provided. Specifically, in addition to the first signal and the second signal, the at least two signals may further include the third signal, and the third signal, the first signal, and the second signal are signals that are transmitted between the terminal device and the first network device at different times. The first network device may send the first signal to the terminal device. Correspondingly, the terminal device receives the first signal sent by the first network device. Then, the terminal device sends the second signal to the first network device. Correspondingly, the first network device receives the second signal sent by the terminal device. Then, the first network device sends the third signal to the terminal device. Correspondingly, the terminal device receives the third signal sent by the first network device. In this case, the first time difference further includes the time difference between sending the second signal by the terminal device and receiving the third signal by the terminal device, and the second time difference further includes the time difference between receiving the second signal by the first network device and sending the third signal by the first network device. Alternatively, the terminal device may send the first signal to the first network device. Correspondingly, the first network device receives the first signal sent by the terminal device. Then, the first network device sends the second signal to the terminal device. Correspondingly, the terminal device receives the second signal sent by the first network device. Then, the terminal device sends the third signal to the first network device. Correspondingly, the first network device receives the third signal sent by the terminal device. In this case, the first time difference further includes the time difference between receiving the second signal by the terminal device and sending the third signal by the terminal device, and the second time difference further includes the time difference between sending the second signal by the first network device and receiving the third signal by the first network device. In this embodiment of this application, the RTT between the terminal device and the network device can be measured based on the time difference between receiving and sending the first signal and the second signal by the terminal device and the network device, and the time difference between receiving and sending the second signal and the third signal by the terminal device and the network device, so that the terminal device is positioned.

In a possible implementation, the method further includes:

sending a first request and a second request, where the first request is for requesting to obtain the first information of the terminal device, and the second request is for requesting to obtain the second information of the first network device.

In this implementation of this application, a possible specific implementation of obtaining the first information and the second information is provided. Specifically, the network side device sends the first request and the second request, and the first request and the second request are respectively for requesting to obtain the first information of the terminal device and requesting to obtain the second information of the first network device. Specifically, the first request may indicate the terminal device to record and report the first time difference between receiving and sending the at least two signals, and the second request may indicate the first network device to record and report the second time difference between receiving and sending the at least two signals. According to this embodiment of this application, the first time difference between receiving and sending the at least two signals by the terminal device and the second time difference between receiving and sending the at least two signals by the first network device can be obtained, and the RTT between the terminal device and the network device can be measured, so that the terminal device is positioned.

According to a second aspect, an embodiment of this application provides a positioning method, and the method includes:

A terminal device obtains first information, where the first information includes information about a first time difference, the first time difference includes a time difference between receiving and sending at least two signals by the terminal device, the at least two signals include any two signals that are transmitted between the terminal device and a first network device in opposite directions at different times, transmission resources consumed by the at least two signals are fewer than transmission resources consumed by a positioning reference signal PRS and a sounding reference signal SRS, and the first network device is a network device corresponding to a first non-terrestrial device; and

the terminal device sends the first information, where the first information is for determining a first round trip time RTT corresponding to the terminal device, and the first RTT is for positioning the terminal device.

In this embodiment of this application, the positioning method is provided. The terminal device obtains the first information, and sends the first information to a network side device, where the first information is for determining the first RTT corresponding to the terminal device, and the first RTT is for positioning the terminal device. The obtained and sent first information includes information about the time difference between receiving and sending the at least two signals by the terminal device, the at least two signals include the any two signals that are transmitted between the terminal device and the first network device in the opposite directions at different times, and the first network device is the network device corresponding to the first non-terrestrial device. In addition, the transmission resources consumed by the at least two signals are fewer than the transmission resources consumed by the PRS and the SRS. According to this embodiment of this application, based on the method for positioning a terminal by a single non-terrestrial device, the time difference between receiving and sending the at least two signals by the terminal device can be obtained, and the RTT between the terminal device and the network device can be measured, so that the terminal device is positioned.

In addition, in comparison with measuring the RTT between the terminal device and the network device based on receiving and sending of the PRS and the SRS, in this embodiment of this application, the RTT between the terminal device and the network device is measured based on receiving and sending of the at least two signals. In this way, related positioning resources do not need to be specially configured for positioning signals such as the PRS and the SRS, signal configuration is simpler and more flexible, positioning complexity is low, the transmission resources consumed by the at least two signals are fewer than the transmission resources consumed by the PRS and the SRS, a positioning delay is reduced, signaling overheads of signal transmission and occupation of time-frequency resources are reduced, and positioning efficiency is improved.

In a possible implementation, the first time difference satisfies at least one of the following:

a time difference interval range corresponding to the first time difference is greater than a first interval range, and a time difference resolution corresponding to the first time difference is greater than a first threshold.

In this implementation of this application, a possible specific implementation of the first time difference is provided. Specifically, the time difference interval range corresponding to the obtained first time difference is greater than the first interval range, and/or the time difference resolution corresponding to the obtained first time difference is greater than the first threshold. It may be understood as that the first interval range may be a time difference interval range corresponding to a time difference between receiving and sending the PRS and the SRS, and the first threshold may be a time difference resolution corresponding to the time difference between receiving and sending the PRS and the SRS. In this case, an allowed interval range of the time difference between receiving and sending the at least two signals is greater than an allowed interval range of the time difference between receiving and sending the PRS and the SRS, and an allowed resolution of the time difference between receiving and sending the at least two signals is also greater than an allowed resolution of the time difference between receiving and sending the PRS and the SRS. According to this embodiment of this application, content of the time difference interval range and the time difference resolution of the obtained first time difference is added, and the time difference interval range and the time difference resolution that correspond to the time difference between receiving and sending the at least two signals are extended, so that receiving and sending of the at least two signals within a larger time difference range and a larger resolution range are allowed. In addition, a quantity of bits occupied by the time difference between receiving and sending the at least two signals is also reduced.

In a possible implementation, the first information further includes at least one of the following:

slot information corresponding to the at least two signals, and orbital height information corresponding to the first non-terrestrial device.

In this implementation of this application, a possible specific implementation of the first information is provided. Specifically, the obtained first information further includes the slot information corresponding to the at least two signals, and/or the orbital height information corresponding to the first non-terrestrial device. It may be understood as that, when the first time difference between receiving and sending the at least two signals is obtained, the slot information corresponding to a quantity of radio frames, subframes, slots, or the like in the at least two signals may be removed, and the slot information corresponding to the at least two signals is separately stored in the first information. In this way, the first time difference can be kept within a small interval range, so that receiving and sending of the at least two signals within a larger time difference range and a larger resolution range can be allowed. When the first time difference between receiving and sending the at least two signals is obtained, information about a distance between the first non-terrestrial device and any reference point may be removed. Specifically, the information about the distance may be the orbital height information corresponding to the first non-terrestrial device. The orbital height information corresponding to the first non-terrestrial device is separately stored in the first information. In this way, the first time difference can be kept within a small interval range, so that receiving and sending of the at least two signals within a larger time difference range and a larger resolution range can be allowed. According to this embodiment of this application, the slot information corresponding to the at least two signals and/or the orbital height information corresponding to the first non-terrestrial device are/is separately stored in the first information. In this way, the first time difference can be kept within a small interval range, so that receiving and sending of the at least two signals within a larger time difference range and a larger resolution range can be allowed.

In a possible implementation, the at least two signals include two or more of a first message Msg1, a second message Msg2, a third message Msg3, and a fourth message Msg4 in a four-step random access procedure; or the at least two signals include a first message MsgA and a second message MsgB in a two-step random access procedure.

In this implementation of this application, a possible specific implementation of the at least two signals is provided. Specifically, the RTT between the terminal device and the network device is measured in the random access procedure or before and after authentication starts, that is, based on receiving and sending of the at least two signals. In this case, the at least two signals may include two or more of the first message Msg1, the second message Msg2, the third message Msg3, and the fourth message Msg4 in the four-step random access procedure; or the at least two signals may include the first message MsgA and the second message MsgB in the two-step random access procedure. According to this embodiment of this application, any two or more messages in the two-step random access procedure or the four-step random access procedure are received and sent, to measure the RTT between the terminal device and the network device. In this way, the network side device does not need to additionally configure related information for the at least two signals. In other words, the related information does not need to be additionally configured to indicate the terminal device to record and report the first time difference between receiving and sending the at least two signals, so that the transmission resources consumed by the at least two signals are further reduced. This reduces a positioning delay, reduces signaling overheads of signal transmission and occupation of time-frequency resources, and improves positioning efficiency.

In a possible implementation, the at least two signals include a channel state information-reference signal CSI-RS and a feedback signal corresponding to the CSI-RS.

In this implementation of this application, a possible specific implementation of the at least two signals is provided. Specifically, the at least two signals include the CSI-RS and the feedback signal corresponding to the CSI-RS. According to this embodiment of this application, the RTT measurement is bound to the CSI-RS and the feedback signal corresponding to the CSI-RS, and the RTT between the terminal device and the network device is measured based on receiving and sending of the CSI-RS and the feedback signal corresponding to the CSI-RS. In this way, the network side device does not need to additionally configure related information for the at least two signals. In other words, the related information does not need to be additionally configured to indicate the terminal device to record and report the first time difference between receiving and sending the at least two signals, so that the transmission resources consumed by the at least two signals are further reduced. This reduces a positioning delay, reduces signaling overheads of signal transmission and occupation of time-frequency resources, and improves positioning efficiency.

In a possible implementation, the at least two signals include a first signal and a second signal, and the first signal and the second signal are two signals that are transmitted between the terminal device and the first network device in opposite directions at different times, where

the first time difference includes a time difference between receiving the first signal by the terminal device and sending the second signal by the terminal device; or
the first time difference includes a time difference between sending the first signal by the terminal device and receiving the second signal by the terminal device.

In this implementation of this application, a possible specific implementation of the at least two signals is provided. Specifically, the at least two signals may include the first signal and the second signal, and the first signal and the second signal are two signals that are transmitted between the terminal device and the first network device in opposite directions at different times. The first network device may send the first signal to the terminal device. Correspondingly, the terminal device receives the first signal sent by the first network device. Then, the terminal device sends the second signal to the first network device. Correspondingly, the first network device receives the second signal sent by the terminal device. In this case, the first time difference includes the time difference between receiving the first signal by the terminal device and sending the second signal by the terminal device. Alternatively, the terminal device may send the first signal to the first network device. Correspondingly, the first network device receives the first signal sent by the terminal device. Then, the first network device sends the second signal to the terminal device. Correspondingly, the terminal device receives the second signal sent by the first network device. In this case, the first time difference includes the time difference between sending the first signal by the terminal device and receiving the second signal by the terminal device. In this embodiment of this application, the RTT between the terminal device and the network device can be measured based on the time difference between receiving and sending the first signal and the second signal by the terminal device and the network device, so that the terminal device is positioned.

In a possible implementation, the at least two signals further include a third signal and a fourth signal, and the third signal, the fourth signal, the first signal, and the second signal are signals transmitted between the terminal device and the first network device at different times, where

the first time difference further includes a time difference between sending the third signal by the terminal device and receiving the fourth signal by the terminal device; or
the first time difference further includes a time difference between receiving the third signal by the terminal device and sending the fourth signal by the terminal device.

In this implementation of this application, a possible specific implementation of the at least two signals is provided. Specifically, in addition to the first signal and the second signal, the at least two signals may further include the third signal and the fourth signal, and the third signal and the fourth signal are two signals that are transmitted between the terminal device and the first network device in opposite directions at different times. The first network device may send the third signal to the terminal device. Correspondingly, the terminal device receives the third signal sent by the first network device. Then, the terminal device sends the fourth signal to the first network device. Correspondingly, the first network device receives the fourth signal sent by the terminal device. In this case, the first time difference includes the time difference between receiving the third signal by the terminal device and sending the fourth signal by the terminal device. Alternatively, the terminal device may send the third signal to the first network device. Correspondingly, the first network device receives the third signal sent by the terminal device. Then, the first network device sends the fourth signal to the terminal device. Correspondingly, the terminal device receives the fourth signal sent by the first network device. In this case, the first time difference includes the time difference between sending the third signal by the terminal device and receiving the fourth signal by the terminal device. In this embodiment of this application, the RTT between the terminal device and the network device can be measured based on the time difference between receiving and sending the first signal and the second signal by the terminal device and the network device, and the time difference between receiving and sending the third signal and the fourth signal by the terminal device and the network device, so that the terminal device is positioned.

In a possible implementation, the at least two signals further include a third signal, and the third signal, the first signal, and the second signal are signals transmitted between the terminal device and the first network device at different times, where

the first time difference further includes a time difference between sending the second signal by the terminal device and receiving the third signal by the terminal device; or
the first time difference further includes a time difference between receiving the second signal by the terminal device and sending the third signal by the terminal device.

In this implementation of this application, a possible specific implementation of the at least two signals is provided. Specifically, in addition to the first signal and the second signal, the at least two signals may further include the third signal, and the third signal, the first signal, and the second signal are signals that are transmitted between the terminal device and the first network device at different times. The first network device may send the first signal to the terminal device. Correspondingly, the terminal device receives the first signal sent by the first network device. Then, the terminal device sends the second signal to the first network device. Correspondingly, the first network device receives the second signal sent by the terminal device. Then, the first network device sends the third signal to the terminal device. Correspondingly, the terminal device receives the third signal sent by the first network device. In this case, the first time difference further includes the time difference between sending the second signal by the terminal device and receiving the third signal by the terminal device. Alternatively, the terminal device may send the first signal to the first network device. Correspondingly, the first network device receives the first signal sent by the terminal device. Then, the first network device sends the second signal to the terminal device. Correspondingly, the terminal device receives the second signal sent by the first network device. Then, the terminal device sends the third signal to the first network device. Correspondingly, the first network device receives the third signal sent by the terminal device. In this case, the first time difference further includes the time difference between receiving the second signal by the terminal device and sending the third signal by the terminal device. In this embodiment of this application, the RTT between the terminal device and the network device can be measured based on the time difference between receiving and sending the first signal and the second signal by the terminal device and the network device, and the time difference between receiving and sending the second signal and the third signal by the terminal device and the network device, so that the terminal device is positioned.

In a possible implementation, the method further includes:

receiving a first request, where the first request is for requesting to obtain the first information of the terminal device.

In this implementation of this application, a possible specific implementation of sending the first information is provided. Specifically, the network side device sends the first request, to request to obtain the first information of the terminal device. Correspondingly, the terminal device receives the first request, and sends the first information in response to the first request. Specifically, the first request may indicate the terminal device to record and report the first time difference between receiving and sending the at least two signals. Correspondingly, the terminal device records and reports, in response to the first request, the first time difference between receiving and sending the at least two signals. According to this embodiment of this application, the first time difference between receiving and sending the at least two signals by the terminal device can be obtained, and the RTT between the terminal device and the network device can be measured, so that the terminal device is positioned.

According to a third aspect, an embodiment of this application provides a communication apparatus. The apparatus includes a module or a unit configured to perform the method according to any one of the first aspect and the second aspect.

In a possible design, the apparatus includes:

a processing unit, configured to obtain first information and second information by using a transceiver unit, where the first information includes information about a first time difference, the first time difference includes a time difference between receiving and sending at least two signals by a terminal device, the second information includes information about a second time difference, the second time difference includes a time difference between receiving and sending the at least two signals by a first network device, the at least two signals include any two signals that are transmitted between the terminal device and the first network device in opposite directions at different times, transmission resources consumed by the at least two signals are fewer than transmission resources consumed by a positioning reference signal PRS and a sounding reference signal SRS, and the first network device is a network device corresponding to a first non-terrestrial device, where
the processing unit is further configured to determine, based on the first information and the second information, a first round trip time RTT corresponding to the terminal device; and
the processing unit is further configured to position the terminal device based on the first RTT.

In a possible implementation, the first time difference satisfies at least one of the following:

a time difference interval range corresponding to the first time difference is greater than a first interval range, and a time difference resolution corresponding to the first time difference is greater than a first threshold.

In a possible implementation, the first information further includes at least one of the following:

slot information corresponding to the at least two signals, and orbital height information corresponding to the first non-terrestrial device.

In a possible implementation, the at least two signals include two or more of a first message Msg1, a second message Msg2, a third message Msg3, and a fourth message Msg4 in a four-step random access procedure; or the at least two signals include a first message MsgA and a second message MsgB in a two-step random access procedure.

In a possible implementation, the at least two signals include a channel state information-reference signal CSI-RS and a feedback signal corresponding to the CSI-RS.

In a possible implementation, the processing unit is further configured to obtain third information by using the transceiver unit, where the third information includes information about a third time difference, the third time difference includes a time difference between receiving and sending at least two signals by at least one second network device, the at least two signals include any two signals that are transmitted between the terminal device and the at least one second network device in opposite directions at different times, transmission resources consumed by the at least two signals are fewer than the transmission resources consumed by the positioning reference signal PRS and the sounding reference signal SRS, and the at least one second network device is a network device corresponding to at least one second non-terrestrial device; and

the processing unit is specifically configured to determine, based on the first information, the second information, and the third information, the first RTT corresponding to the terminal device.

In a possible implementation, the at least two signals include a first signal and a second signal, and the first signal and the second signal are two signals that are transmitted between the terminal device and the first network device in opposite directions at different times, where

the first time difference includes a time difference between receiving the first signal by the terminal device and sending the second signal by the terminal device, and the second time difference includes a time difference between sending the first signal by the first network device and receiving the second signal by the first network device; or
the first time difference includes a time difference between sending the first signal by the terminal device and receiving the second signal by the terminal device, and the second time difference includes a time difference between receiving the first signal by the first network device and sending the second signal by the first network device.

In a possible implementation, the at least two signals further include a third signal and a fourth signal, and the third signal, the fourth signal, the first signal, and the second signal are signals transmitted between the terminal device and the first network device at different times, where

the first time difference further includes a time difference between sending the third signal by the terminal device and receiving the fourth signal by the terminal device, and the second time difference further includes a time difference between receiving the third signal by the first network device and sending the fourth signal by the first network device; or the first time difference further includes a time difference between receiving the third signal by the terminal device and sending the fourth signal by the terminal device, and the second time difference further includes a time difference between sending the third signal by the first network device and receiving the fourth signal by the first network device.

In a possible implementation, the at least two signals further include a third signal, and the third signal, the first signal, and the second signal are signals transmitted between the terminal device and the first network device at different times, where

the first time difference further includes a time difference between sending the second signal by the terminal device and receiving the third signal by the terminal device, and the second time difference further includes a time difference between receiving the second signal by the first network device and sending the third signal by the first network device; or the first time difference further includes a time difference between receiving the second signal by the terminal device and sending the third signal by the terminal device, and the second time difference further includes a time difference between sending the second signal by the first network device and receiving the third signal by the first network device.

In a possible implementation, the transceiver unit is further configured to send a first request and a second request, where the first request is for requesting to obtain the first information of the terminal device, and the second request is for requesting to obtain the second information of the first network device.

For technical effect brought by the third aspect or any possible implementation, refer to descriptions of the technical effect corresponding to the first aspect or the corresponding implementations.

In another possible design, the apparatus includes:

a processing unit, configured to obtain first information, where the first information includes information about a first time difference, the first time difference includes a time difference between receiving and sending at least two signals by the communication apparatus, the at least two signals include any two signals that are transmitted between the communication apparatus and a first network device in opposite directions at different times, transmission resources consumed by the at least two signals are fewer than transmission resources consumed by a positioning reference signal PRS and a sounding reference signal SRS, and the first network device is a network device corresponding to a first non-terrestrial device; and
a transceiver unit, configured to send the first information, where the first information is for determining a first round trip time RTT corresponding to the communication apparatus, and the first RTT is for positioning the communication apparatus.

In a possible implementation, the first time difference satisfies at least one of the following:
a time difference interval range corresponding to the first time difference is greater than a first interval range, and a time difference resolution corresponding to the first time difference is greater than a first threshold.

In a possible implementation, the first information further includes at least one of the following:
slot information corresponding to the at least two signals, and orbital height information corresponding to the first non-terrestrial device.

In a possible implementation, the at least two signals include two or more of a first message Msg1, a second message Msg2, a third message Msg3, and a fourth message Msg4 in a four-step random access procedure; or the at least two signals include a first message MsgA and a second message MsgB in a two-step random access procedure.

In a possible implementation, the at least two signals include a channel state information-reference signal CSI-RS and a feedback signal corresponding to the CSI-RS.

In a possible implementation, the at least two signals include a first signal and a second signal, and the first signal and the second signal are two signals transmitted between the communication apparatus and the first network device in opposite directions at different times, where

the first time difference includes a time difference between receiving the first signal by the communication apparatus and sending the second signal by the communication apparatus; or

the first time difference includes a time difference between sending the first signal by the communication apparatus and receiving the second signal by the communication apparatus.

In a possible implementation, the at least two signals further include a third signal and a fourth signal, and the third signal, the fourth signal, the first signal, and the second signal are signals transmitted between the communication apparatus and the first network device at different times, where

the first time difference further includes a time difference between sending the third signal by the communication apparatus and receiving the fourth signal by the communication apparatus; or
the first time difference further includes a time difference between receiving the third signal by the communication apparatus and sending the fourth signal by the communication apparatus.

In a possible implementation, the at least two signals further include a third signal, and the third signal, the first signal, and the second signal are signals transmitted between the communication apparatus and the first network device at different times, where

the first time difference further includes a time difference between sending the second signal by the communication apparatus and receiving the third signal by the communication apparatus; or
the first time difference further includes a time difference between receiving the second signal by the communication apparatus and sending the third signal by the communication apparatus.

In a possible implementation, the transceiver unit is further configured to receive a first request, where the first request is for requesting to obtain the first information of the communication apparatus.

For technical effect brought by the third aspect or any possible implementation, refer to descriptions of the technical effect corresponding to the second aspect or the corresponding implementations.

According to a fourth aspect, an embodiment of this application provides a communication apparatus, and the communication apparatus includes a processor. The processor is coupled to a memory, and may be configured to execute instructions in the memory, to implement the method according to any one of the first aspect and the second aspect and the possible implementations of the first aspect and the second aspect. Optionally, the communication apparatus further includes the memory. Optionally, the communication apparatus further includes a communication interface, and the processor is coupled to the communication interface.

According to a fifth aspect, an embodiment of this application provides a communication apparatus, including a logic circuit and a communication interface. The communication interface is configured to receive information or send information. The logic circuit is configured to receive information or send information through the communication interface, so that the communication apparatus performs the method according to any one of the first aspect and the second aspect and the possible implementations of the first aspect and the second aspect.

According to a sixth aspect, an embodiment of this application provides a computer-readable storage medium, and the computer-readable storage medium is configured to store a computer program (which may also be referred to as code or instructions). When the computer program is run on a computer, the method according to any one of the first aspect and the second aspect and the possible implementations of the first aspect and the second aspect is implemented.

According to a seventh aspect, an embodiment of this application provides a computer program product, and the computer program product includes a computer program (which may also be referred to as code or instructions). When the computer program is run, a computer is enabled to perform the method according to any one of the first aspect and the second aspect and the possible implementations of the first aspect and the second aspect.

According to an eighth aspect, an embodiment of this application provides a chip, the chip includes a processor, and the processor is configured to execute instructions. When the processor executes the instructions, the chip is enabled to perform the method according to any one of the first aspect and the second aspect and the possible implementations of the first aspect and the second aspect. Optionally, the chip further includes a communication interface, and the communication interface is configured to receive a signal or send a signal.

According to a ninth aspect, an embodiment of this application provides a communication system, and the communication system includes at least one of the communication apparatus in the third aspect, the communication apparatus in the fourth aspect, the communication apparatus in the fifth aspect, or the chip in the eighth aspect.

According to a tenth aspect, an embodiment of this application provides a communication system, and the communication system includes a network device and a terminal device. The network device is configured to perform the method according to any one of the first aspect and the possible implementations, and the terminal device is configured to perform the method according to any one of the second aspect and the possible implementations.

In addition, in a process of performing the method according to any one of the first aspect and the second aspect and the possible implementations of the first aspect and the second aspect, a process related to sending information and/or receiving information and the like in the foregoing method may be understood as a process of outputting information by the processor, and/or a process of receiving input information by the processor. When outputting the information, the processor may output the information to a transceiver (or a communication interface or a sending module), so that the transceiver transmits the information. After the information is output by the processor, other processing may further need to be performed on the information before the information arrives at the transceiver. Similarly, when the processor receives the input information, the transceiver (or the communication interface or the sending module) receives the information, and inputs the information into the processor. Further, after the transceiver receives the information, other processing may need to be performed on the information before the information is input into the processor.

Based on the foregoing principle, for example, sending information in the foregoing method may be understood as outputting information by the processor. For another example, receiving information may be understood as receiving input information by the processor.

Optionally, operations such as transmission, sending, and receiving related to the processor may be more generally understood as operations such as output, receiving, and input of the processor, unless otherwise specified, or provided that the operations do not contradict actual functions or internal logic of the operations in related descriptions.

Optionally, in the process of performing the method according to any one of the first aspect and the second aspect and the possible implementations of the first aspect and the second aspect, the processor may be a processor specially configured to perform these methods, or may be a processor, for example, a general-purpose processor, that executes computer instructions in the memory to perform these methods. The memory may be a non-transitory (non-transitory) memory, for example, a read-only memory (Read-Only Memory, ROM). The memory and the processor may be integrated on a same chip, or may be separately disposed on different chips. A type of the memory and a manner of disposing the memory and the processor are not limited in embodiments of this application.

In a possible implementation, the at least one memory is located outside an apparatus.

In another possible implementation, the at least one memory is located in an apparatus.

In still another possible implementation, some memories in the at least one memory are located in an apparatus, and the other memories are located outside the apparatus.

In this application, the processor and the memory may alternatively be integrated into one component. In other words, the processor and the memory may alternatively be integrated together.

In embodiments of this application, based on the method for positioning the terminal by the single non-terrestrial device, the time difference between receiving and sending the at least two signals by the terminal device and the time difference between receiving and sending the at least two signals by the network device can be obtained, and the RTT between the terminal device and the network device can be measured, so that the terminal device is positioned.

## BRIEF DESCRIPTION OF DRAWINGS

To describe the technical solutions in embodiments of this application more clearly, the following briefly describes the accompanying drawings needed for describing embodiments of this application. It is clear that the accompanying drawings described below show merely some embodiments of this application, and a person of ordinary skill in the art may derive other drawings from these accompanying drawings without creative efforts.

FIG. 1A is a diagram of an architecture of a communication system according to an embodiment of this application;
FIG. 1B is a diagram of an architecture of a communication system according to an embodiment of this application;
FIG. 1C is a diagram of an architecture of a communication system according to an embodiment of this application;
FIG. 2A is a diagram of signal receiving and sending according to an embodiment of this application;
FIG. 2B is a diagram of signal receiving and sending according to an embodiment of this application;
FIG. 2C is a diagram of signal receiving and sending according to an embodiment of this application;
FIG. 3 is a schematic flowchart of a positioning method according to an embodiment of this application;
FIG. 4A is a diagram of signal receiving and sending according to an embodiment of this application;
FIG. 4B is a diagram of signal receiving and sending according to an embodiment of this application;
FIG. 5A is a diagram of signal receiving and sending according to an embodiment of this application;
FIG. 5B is a diagram of signal receiving and sending according to an embodiment of this application;
FIG. 6A is a diagram of signal receiving and sending according to an embodiment of this application;
FIG. 6B is a diagram of signal receiving and sending according to an embodiment of this application;
FIG. 7 is a diagram of a structure of a communication apparatus according to an embodiment of this application;
FIG. 8 is a diagram of a structure of a communication apparatus according to an embodiment of this application; and
FIG. 9 is a diagram of a structure of a chip according to an embodiment of this application.

## DESCRIPTION OF EMBODIMENTS

To make objectives, technical solutions, and advantages of this application clearer, the following describes embodiments of this application with reference to accompanying drawings in embodiments of this application.

The terms "first", "second", and the like in the specification, the claims, and the accompanying drawings of this application are for distinguishing between different objects, but are not for describing a specific sequence. In addition, terms such as "include" and "have" and any other variants thereof are intended to cover a non-exclusive inclusion. For example, processes, methods, systems, products, devices, or the like that include a series of steps or units are not limited to listed steps or units, but instead, optionally further include steps, units, or the like that are not listed, or optionally further include other steps or units inherent to these processes, methods, products, devices, or the like.

An "embodiment" mentioned in the specification indicates that a particular feature, structure, or characteristic described in combination with this embodiment may be included in at least one embodiment of this application. The phrase shown in various locations in the specification may not necessarily refer to a same embodiment, and is not an independent or optional embodiment exclusive from another embodiment. A person skilled in the art may explicitly and implicitly understand that, in embodiments of this application, unless otherwise stated or there is a logic conflict, terms and/or descriptions in embodiments are consistent and may be mutually referenced, and technical features in different embodiments may be combined based on an internal logical relationship thereof, to form a new embodiment.

It should be understood that, in this application, "at least one (item)" means one or more, "a plurality of" means two or more, "at least two (items)" means two, three, or more, and "and/or" is for describing an association relationship between associated objects, and indicates that there may be three relationships. For example, "A and/or B" may indicate that only A exists, only B exists, and both A and B exist, where A and B may be singular or plural. The character "/" usually indicates an "or" relationship between the associated objects. "At least one of the following items (pieces)" or a similar expression thereof means any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural.

This application provides a positioning method, applied to the field of communication technologies. Optionally, the method may be applied to positioning in an NTN communication scenario. To describe the solutions of this application more clearly, the following first describes some knowledge related to NTN communication.

With development of information technologies, modern communication systems impose more urgent requirements on communication efficiency, mobility, diversity, and the like. Currently, in some important application scenarios, for example, in the fields of space communication, aviation communication, maritime communication, military communication, and the like, NTN communication, represented by non-terrestrial devices such as satellites, unmanned aerial vehicles, and high-altitude platforms, plays an irreplaceable role.

For ease of description, the following uses a non-terrestrial device represented by a satellite as an example for description.

Satellite communication has characteristics of a long communication distance, a large coverage area, flexible networking, and the like, which can provide communication services for both fixed terminals and various mobile terminals. A conventional terrestrial network cannot provide seamless coverage for terminal devices, especially in places in which a base station cannot be deployed, such as in seas, in deserts, or in the air. Therefore, an NTN is introduced into a 5th generation (the 5th generation, 5G) mobile communication system, and the NTN provides seamless coverage communication for terminal devices by deploying a base station or some functions of the base station on a high-altitude platform or a satellite. In addition, the high-altitude platform or the satellite is less subject to natural disasters, so that reliability of the 5G system can be improved. In an NTN deployed based on a satellite, the satellite covers the ground by using different beams, to form a satellite cell, and a terminal device may be covered by a plurality of satellite cells at a same moment.

Satellite communication systems may be classified into the following three types based on orbital heights of satellites:

a geostationary earth orbit (geostationary earth orbit, GEO) satellite communication system, also referred to as a synchronous orbit satellite system, a medium earth orbit (medium earth orbit, MEO) satellite communication system, and a low earth orbit (low earth orbit, LEO) satellite communication system.

A GEO satellite has an orbital height of 35786 km. A main advantage is that the GEO satellite remains stationary relative to the ground and provides a large coverage area. Disadvantages are as follows: (1) An orbit of the GEO satellite is far away from the earth, and a free space propagation loss is large. As a result, a communication link budget is tight. To increase a transmit/receive gain, an antenna with a large diameter needs to be configured for the satellite. (2) A communication transmission delay is long, and a round trip time may reach about 500 ms. This cannot satisfy requirements of real-time services. (3) The GEO has limited orbit resources and high transmission costs, and cannot provide coverage for polar regions of the earth.

A MEO satellite has an orbital height of 2000 km to 35786 km. An advantage is that global coverage can be implemented by using a smaller quantity of satellites.

However, the MEO satellite has a higher orbital height than the LEO, and a transmission delay is still longer than that of the LEO satellite. Based on the advantage and disadvantage of MEO satellite communication, the MEO satellite is mainly used for positioning and navigation.

A LEO satellite has an orbital height of 300 km to 2000 km. The LEO satellite has a lower orbital height than the MEO and the GEO, and has advantages of a short data transmission delay, a small transmission loss, and low transmission costs. To improve an overall signal processing capability and communication throughput of a satellite network, a satellite operator increases a quantity of satellites to make up for a limitation of a single satellite in a communication capability. In a future NTN communication system, after a terminal device accesses the system, within a period of time, a plurality of satellites that can communicate with the terminal device and the terminal device are "visible" to each other. In this case, all the plurality of satellites may provide a communication service for the terminal device. This provides a basic condition for multi-satellite coordinated transmission.

The technical solutions provided in embodiments of this application may be applied to various communication systems, for example, a satellite communication system, and a system in which satellite communication and a cellular network are converged. The cellular network system may include but is not limited to a 5G system, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, an advanced long term evolution (advanced long term evolution, LTE-A) system, a new radio (new radio, NR) system, an evolved system of the NR system, an LTE-based access to unlicensed spectrum (LTE-based access to unlicensed spectrum, LTE-U) system, an NR-based access to unlicensed spectrum (NR-based access to unlicensed spectrum, NR-U) system, a universal mobile telecommunications system (universal mobile telecommunications system, UMTS), a worldwide interoperability for microwave access (worldwide interoperability for microwave access, WiMAX) communication system, a wireless local area network (wireless local area network, WLAN), wireless fidelity (wireless fidelity, Wi-Fi), a next generation communication system, another communication system, or the like. Usually, a conventional communication system supports a finite quantity of connections and is easy to implement. However, with development of communication technologies, a mobile communication system not only supports conventional communication, but also supports, for example, device to device (device to device, D2D) communication, machine to machine (machine to machine, M2M) communication, machine type communication (machine type communication, MTC), vehicle to vehicle (vehicle to vehicle, V2V) communication, and other future evolved communication systems. Embodiments of this application may also be applied to these communication systems. The satellite communication system may include various non-terrestrial network systems, for example, networks in which radio frequency transmission is performed by a satellite, an unmanned aircraft system (unmanned aircraft system, UAS) platform, or the like. This is not listed one by one herein.

For example, the following uses an NTN system as an example to provide a specific application scenario of this solution. The NTN system may be specifically a satellite communication system or another non-terrestrial network system. The positioning method in this solution may be applied to a satellite communication scope.

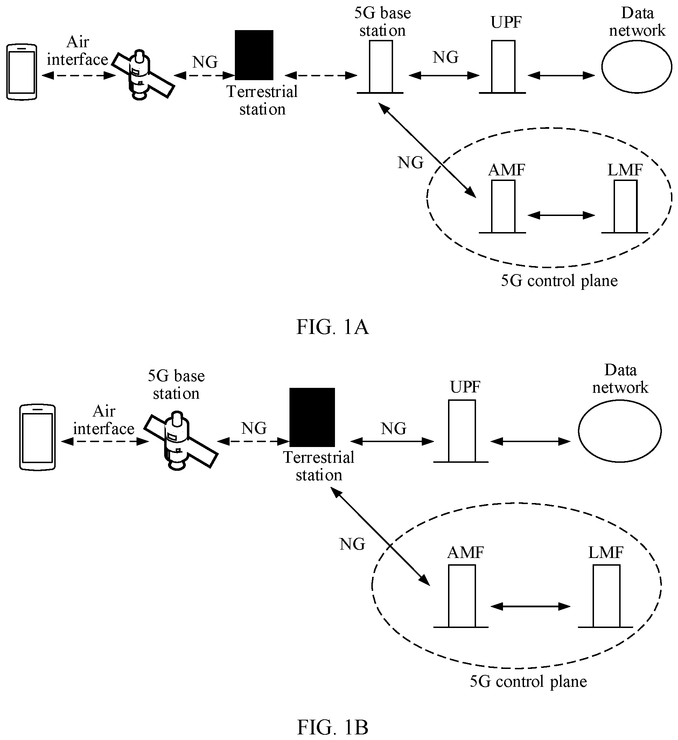

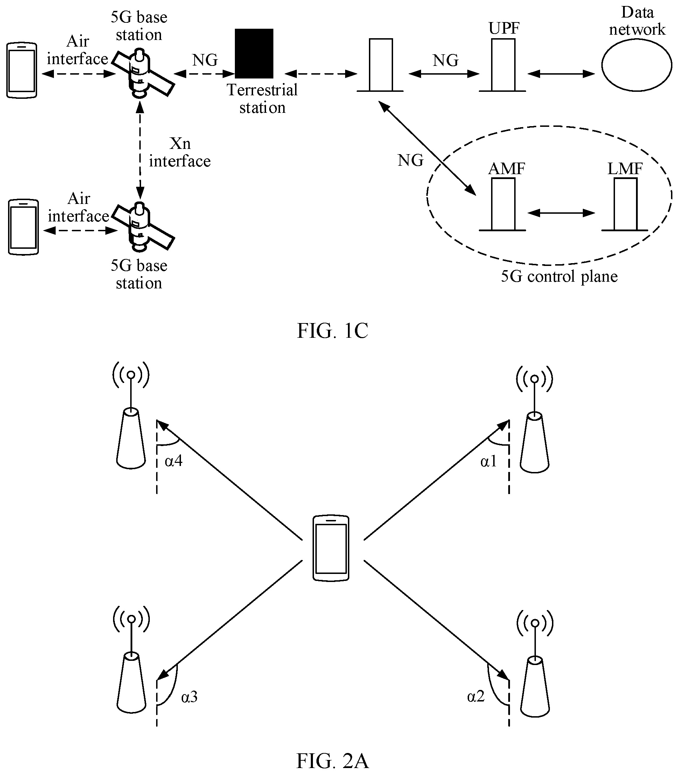

Refer to FIG. 1A, FIG. 1B, and FIG. 1C. A 5G communication system is used as an example. FIG. 1A, FIG. 1B, and FIG. 1C are diagrams of architectures of several communication systems according to embodiments of this application.

As shown in FIG. 1A, FIG. 1B, and FIG. 1C, there may be one or more terminal devices (for example, mobile terminals) and/or network devices (for example, 5G base stations) in a coverage region of a cell of a satellite. The coverage region of the cell may be a region covered by one or more beams of the satellite, or regions at a same cell level in a same NR system.

In FIG. 1A, a terrestrial terminal device (for example, a mobile terminal) accesses a network through an air interface, and a network device (for example, a 5G base station) may be deployed on the ground, is directly connected to a terrestrial 5G core network through a radio link, and is connected to a terrestrial station for satellite communication. This type of communication architecture is also referred to as a transparent satellite network architecture. Therefore, the base station is on ground. In addition, a wireless link exists between satellites, to complete signaling exchanging and user data transmission between base stations.

In FIG. 1B, a terrestrial terminal device (for example, a mobile terminal) accesses a network through an air interface, and a network device (for example, a 5G base station) may be deployed on a satellite, and is connected to a terrestrial 5G core network through a radio link and a terrestrial station. This type of communication architecture is also referred to as a regenerative satellite network architecture. Therefore, the base station or some functions of the base station are on the satellite. In addition, a wireless link exists between satellites, to complete signaling exchanging and user data transmission between base stations.

In FIG. 1C, a terrestrial terminal device (for example, a mobile terminal) accesses a network through an air interface, and a network device (for example, a 5G base station) or some functions of the network device (for example, the 5G base station) are deployed on a satellite, and are connected to a terrestrial 5G core network through a radio link and a terrestrial station. Some functions of a network device (for example, a 5G base station) are deployed on the ground, are directly connected to the terrestrial 5G core network through the radio link, and are connected to the terrestrial station for satellite communication. Therefore, in this type of communication architecture, the base station or some functions of the base station are respectively on the satellite and the ground. In addition, a wireless link exists between satellites, to complete signaling exchanging and user data transmission between base stations.

It may be understood that in actual deployment, the satellite in the foregoing system may be replaced with another NTN device such as a high-altitude platform (high altitude platform station, HAPS). This is not limited in this application.

Network elements in the scenario and their interfaces are described as follows.

The terminal device is a mobile device supporting 5G new radio, is typically a mobile device such as a user terminal or a wearable device, and may access a satellite network through an air interface and initiate call, internet access, and other services.

The 5G base station mainly provides a radio access service, schedules a radio resource for an access terminal, provides a reliable radio transmission protocol and data encryption protocol, and the like.

The 5G core network provides services such as user access control, mobility management, session management, user security authentication, and charging. The 5G core network includes a plurality of functional units, and may be divided into a control plane functional entity and a data plane functional entity. An access and mobility management unit (access and mobility management function, AMF) is responsible for user access management, security authentication, and mobility management. A location management unit (location management function, LMF) is responsible for managing and controlling a positioning service request of a target terminal, and processing positioning-related information. A user plane unit (user plane function, UPF) is responsible for managing functions such as user plane data transmission and traffic statistics collection.

A terrestrial station is responsible for forwarding signaling and service data between a satellite base station and a 5G core network.

5G new radio is a radio link between user equipment and a base station.

An Xn interface is an interface between 5G base stations and is configured for signaling exchange, such as switching.

An NG interface is an interface between a 5G base station and a 5G core network, and is mainly for exchanging non-access stratum (non-access stratum, NAS) and other signaling of the core network and user service data.

The technical solutions provided in this application mainly relate to two execution bodies: a network device and a terminal device, and may be applied to a communication system such as 5G, and in particular, to a communication process of a non-terrestrial network.

The terminal device in embodiments of this application includes but is not limited to an apparatus configured to receive/send a communication signal through a wired connection, for example, through a public switched telephone network (public switched telephone network, PSTN), a digital subscriber line (digital subscriber line, DSL), a digital cable, or a direct cable connection; and/or through another data connection network; and/or through a wireless interface, for example, through a cellular network, a wireless local area network (wireless local area network, WLAN), a digital television network such as a digital video broadcast-handheld (digital video broadcast-handheld, DVB-H) network, a satellite network, an amplitude modulation-frequency modulation (amplitude modulation-frequency modulation, AM-FM) broadcast transmitter; and/or through another terminal device; and/or an internet of things (internet of things, IoT) device. A terminal device configured to perform communication through a wireless interface may be referred to as a "wireless communication terminal", a "wireless terminal", or a "mobile terminal". Examples of the terminal device include but are not limited to a satellite phone or a cellular phone; a personal communications system (personal communications system, PCS) terminal that may combine a cellular radio phone with data processing, faxing, and data communication capabilities; a personal digital assistant (personal digital assistant, PDA) that may include a radio phone, a pager, internet/intranet access, a Web browser, a notepad, a calendar, and/or a global positioning system (global positioning system, GPS) receiver; and a conventional laptop and/or palmtop receiver or another electronic apparatus including a radio phone transceiver. The terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. Alternatively, the terminal device may be a cellular phone, a cordless phone, a session initiation protocol (session initiation protocol, SIP) phone, a wireless local loop (wireless local loop, WLL) station, a PDA, a handheld device having a wireless communication function, a computing device or another processing device connected to a wireless modem, a vehicle-mounted device, a wearable device, a terminal device in a 5G network, a terminal device in a future evolved public land mobile communication network (public land mobile network, PLMN), or the like.

The network device in embodiments of this application may provide communication coverage in a specific geographical region, may communicate with one or more terminal devices located in the coverage region, and may be configured for communication with one or more base stations having some terminal functions (for example, communication between a macro base station and a micro base station such as an access point). Optionally, the network device may be a satellite, a base transceiver station (base transceiver station, BTS) in a GSM system or a CDMA system, an evolved NodeB (evolved NodeB, eNB) in an LTE system, a next generation node base station (next generation node base station, gNB) in a 5G system or an NR system, another satellite base station, or a satellite relay node. Alternatively, the network device may be an access point (access point, AP), a transmission node (transport point, TRP), a central unit (central unit, CU), or another network entity, and may include some or all functions of the foregoing network entities.

It may be understood that a device having a communication function in a network/system in embodiments of this application may be referred to as a communication device. The communication systems shown in FIG. 1A, FIG. 1B, and FIG. 1C are used as examples. The communication device may include a network device and a terminal device that have a communication function. The network device and the terminal device may be specific devices described above, and details are not described herein again. The communication device may further include another device in the communication systems, for example, a network controller, a mobility management entity, or other network entities. This is not limited in embodiments of this application.

It should be further noted that in this application, the descriptions "satellite" and "satellite network device" are equivalent. That is, a satellite mentioned in this application represents a set of a satellite and another network device that are related to satellite communication.

It may be understood that a cell in the NTN system may be a projection region of a beam of a satellite on the ground, or may be projection regions of a plurality of beams of the satellite on the ground, or may be a part of a projection region of one or more beams on the ground. This is not limited in embodiments of this application.

It may be understood that the communication systems shown in FIG. 1A, FIG. 1B, and FIG. 1C are used as examples. In satellite communication, when a satellite provides a communication service, a location of a terminal device usually needs to be known. Currently, a terrestrial terminal device may obtain a location of the terminal device by using a GNSS, and report the location to a network side. However, location information reported by the terminal device may be tampered with or affected by interference, resulting in a large error. Therefore, how the network side positions the terrestrial terminal device or verifies the location information reported by the terrestrial terminal device becomes an urgent technical problem to be resolved.

Currently, there are a plurality of methods for terrestrial network positioning. The terrestrial terminal device is positioned by measuring different parameters. Measured content includes one or a combination of a positioning reference signal receiving direction angle, positioning reference signal received power, a positioning reference signal signal-to-noise ratio, a positioning reference signal delay, and a positioning reference signal delay time difference.

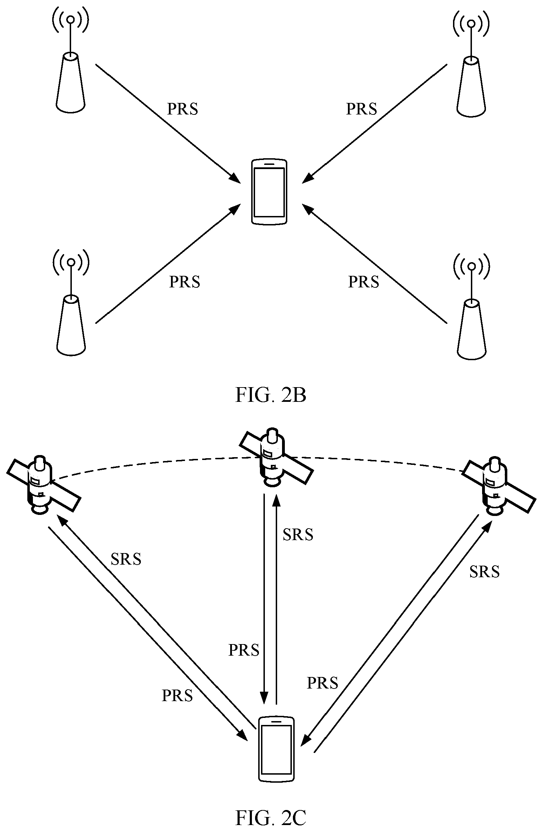

For details, refer to FIG. 2A, FIG. 2B, and FIG. 2C. FIG. 2A, FIG. 2B, and FIG. 2C are diagrams of several types of signal receiving and sending according to embodiments of this application.

In FIG. 2A, a base station measures an uplink angle of arrival (uplink angle of arrival, UL-AOA) based on a beam in which a terminal is located, and reports a measurement result to a positioning server. The positioning server positions the terminal by using known base station locations and a plurality of pieces of UL-AOA measurement.

In FIG. 2B, a terminal measures received power (reference signal received power, RSRP) of a positioning reference signal (positioning reference signal, PRS) from a base station, and reports a measurement result to a positioning server. The positioning server positions the terminal by using known base station locations and a plurality of pieces of measurement information.

Alternatively, a terminal measures time differences (reference signal time differences, RSTDs) of arrival of positioning reference signals of different base stations, and reports measurement results to a positioning server. The positioning server positions the terminal by using known base station locations and a plurality of pieces of RSTD measurement information.

Alternatively, a terminal sends a sounding reference signal (sounding reference signal, SRS), a plurality of base stations receive the SRS, and report a relative time of arrival (relative time of arrival, RTOA) to a positioning server. The positioning server positions the terminal by using known base station locations and a plurality of pieces of RTOA measurement information.

Alternatively, a terminal is positioned by using a multi-cell round trip time (round trip time, RTT). The multi-cell RTT is mainly RTTs between the terminal and a plurality of base stations that are estimated based on a corresponding time difference between signal sending and signal receiving. A main process is as follows: The base station delivers a positioning reference signal PRS. After receiving the PRS, the terminal sends a sounding reference signal SRS and a corresponding time difference between receiving and sending the PRS and the SRS. The base station subtracts the time difference between the PRS and the SRS that is reported by the terminal from a time difference between sending the PRS and receiving the SRS by the base station, to obtain the RTT. A positioning server positions the terminal by using known base station locations and a plurality of pieces of RTT measurement information.

In FIG. 2C, when a satellite moves to different locations, an RTT between a terminal and a base station is measured by using a time difference between sending and receiving of a PRS and an SRS, and a network side may consider that the satellites at different locations are equivalent to a plurality of base stations. In this way, the terminal is positioned by using known satellite locations and a plurality of measured RTTs.

However, the foregoing signal receiving and sending depend on signal receiving and sending between the terminal and the plurality of base stations. In satellite communication, the terminal may not be always covered by a plurality of satellites, complexity of simultaneously receiving, by the plurality of satellites on corresponding resources, an uplink signal from a same terminal is high, and synchronization between the terminal and the plurality of satellites has a high requirement on the terminal. In this case, there is a great limitation on terminal positioning by using the plurality of satellites. In addition, AOA measurement is mainly applied to an array antenna, and currently, a parabolic antenna is mostly used on a satellite side in the satellite communication. In the satellite communication, because near-far effect is insignificant, RSRP is easily affected by a plurality of factors such as an environment and an antenna, and has high ambiguity. Therefore, it is not suitable to position the terminal based on the RSRP.

In addition, measuring RTTs between the satellite at different locations and the terminal depends on receiving and sending of the PRS and the SRS. Before the measurement starts, a network side needs to configure an uplink SRS, and send corresponding configuration information to the terminal. In addition, the network side also needs to send downlink PRS-related configuration information to the terminal. Therefore, during the RTT measurement, using the PRS and the SRS causes extra overheads and a delay, and transmission of the PRS and the SRS also occupies corresponding time-frequency resources.

It can be learned from the foregoing descriptions that, in the satellite communication, how the network side positions the terrestrial terminal device or verifies location information reported by the terrestrial terminal device becomes an urgent technical problem to be resolved.

To resolve the foregoing problem, embodiments of this application provide a new positioning method, to position a terminal based on a single non-terrestrial device, obtain a time difference between receiving and sending at least two signals by a terminal device and a time difference between receiving and sending the at least two signals by a network device, and measure an RTT between the terminal device and the network device, so that the terminal device is positioned. In addition, the RTT between the terminal device and the network device is measured based on receiving and sending of the at least two signals. In this way, related positioning resources do not need to be specially configured for positioning signals such as the PRS and the SRS, signal configuration is simpler and more flexible, positioning complexity is low, transmission resources consumed by the at least two signals are fewer than transmission resources consumed by the PRS and the SRS, a positioning delay is reduced, signaling overheads of signal transmission and occupation of time-frequency resources are reduced, and positioning efficiency is improved.

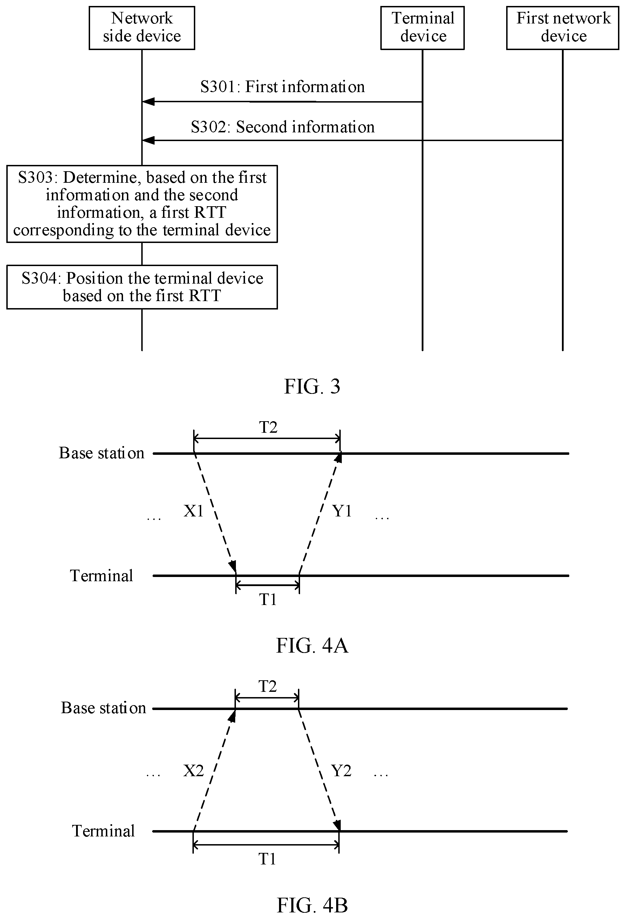

FIG. 3 is a schematic flowchart of a positioning method according to an embodiment of this application. The positioning method may be applied to the field of NTN communication technologies, and the positioning method includes but is not limited to the following steps.

S301: A terminal device sends first information to a network side device, and correspondingly, the network side device receives the first information sent by the terminal device.

The first information includes information about a time difference between receiving and sending at least two signals by the terminal device, and the at least two signals include any two signals that are transmitted between the terminal device and a first network device in opposite directions at different times. In addition, transmission resources consumed by the at least two signals are fewer than transmission resources consumed by a positioning reference signal PRS and a sounding reference signal SRS.

It may be understood that the any two signals that are transmitted between the terminal device and the first network device in the opposite directions at different times do not include the PRS and the SRS. To be specific, the at least two signals include any two signals other than the positioning reference signal PRS and the sounding reference signal SRS and transmitted between the terminal device and the first network device in the opposite directions at different times.

It may be understood that the at least two signals may include a combination of the positioning reference signal PRS and another signal, and the another signal does not include the sounding reference signal SRS. The at least two signals may include a combination of the sounding reference signal SRS and another signal, and the another signal does not include the positioning reference signal PRS. The at least two signals may include a combination of signals other than the positioning reference signal PRS and the sounding reference signal SRS.

It may be understood that the transmission resources consumed by the at least two signals are fewer than the transmission resources consumed by the positioning reference signal PRS and the sounding reference signal SRS. For receiving and sending of the at least two signals, related positioning resources do not need to be specially configured for positioning signals such as the PRS and the SRS, signal configuration is simpler and more flexible, positioning complexity is low, the transmission resources consumed by the at least two signals are fewer than the transmission resources consumed by the PRS and the SRS, a positioning delay is reduced, signaling overheads of signal transmission and occupation of time-frequency resources are reduced, and positioning efficiency is improved.

It may be understood that the at least two signals may alternatively not include other positioning signals similar to the positioning reference signal PRS, the sounding reference signal SRS, and the like, so that the related positioning resources do not need to be specially configured for the positioning signals such as the PRS and the SRS for receiving and sending of the at least two signals. In this way, the transmission resources consumed by the at least two signals are fewer than transmission resources consumed by the positioning signals such as the PRS and the SRS.

The terminal device in this embodiment of this application is a device equipped with a processor that can be configured to execute computer-executable instructions, may be a mobile terminal, for example, a vehicle-mounted terminal or a handheld terminal, may be specifically the UE in FIG. 1A, FIG. 1B, or FIG. 1C, and is configured to perform the positioning method in this embodiment of this application, to position the terminal device.

The first network device in this embodiment of this application is a device equipped with a processor that can be configured to execute computer-executable instructions, may be specifically the base station in FIG. 1A, FIG. 1B, or FIG. 1C, and is configured to perform the positioning method in this embodiment of this application, to position the terminal device.

The network side device in this embodiment of this application is a device equipped with a processor that can be configured to execute computer-executable instructions, may be specifically the base station or the core network in FIG. 1A, FIG. 1B, or FIG. 1C, and is configured to perform the positioning method in this embodiment of this application, to position the terminal device.

It may be understood that the network side device in this embodiment of this application may be the first network device, or may be another network device different from the first network device. This is not limited in this embodiment of this application.

S302: The first network device sends second information to the network side device, and correspondingly, the network side device receives the first information sent by the first network device.

The second information includes information about a time difference between receiving and sending at least two signals by the first network device, and the at least two signals include any two signals that are transmitted between the terminal device and the first network device in opposite directions at different times. In addition, transmission resources consumed by the at least two signals are fewer than the transmission resources consumed by the positioning reference signal PRS and the sounding reference signal SRS.

It may be understood that the any two signals that are transmitted between the terminal device and the first network device in the opposite directions at different times do not include the PRS and the SRS. To be specific, the at least two signals include any two signals other than the positioning reference signal PRS and the sounding reference signal SRS and transmitted between the terminal device and the first network device in the opposite directions at different times.

It may be understood that the at least two signals may include a combination of the positioning reference signal PRS and another signal, and the another signal does not include the sounding reference signal SRS. The at least two signals may include a combination of the sounding reference signal SRS and another signal, and the another signal does not include the positioning reference signal PRS. The at least two signals may include a combination of signals other than the positioning reference signal PRS and the sounding reference signal SRS.

It may be understood that the transmission resources consumed by the at least two signals are fewer than the transmission resources consumed by the positioning reference signal PRS and the sounding reference signal SRS. For receiving and sending of the at least two signals, related positioning resources do not need to be specially configured for positioning signals such as the PRS and the SRS, signal configuration is simpler and more flexible, positioning complexity is low, the transmission resources consumed by the at least two signals are fewer than the transmission resources consumed by the PRS and the SRS, a positioning delay is reduced, signaling overheads of signal transmission and occupation of time-frequency resources are reduced, and positioning efficiency is improved.

It may be understood that the at least two signals may alternatively not include other positioning signals similar to the positioning reference signal PRS, the sounding reference signal SRS, and the like, so that the related positioning resources do not need to be specially configured for the positioning signals such as the PRS and the SRS for receiving and sending of the at least two signals. In this way, the transmission resources consumed by the at least two signals are fewer than transmission resources consumed by the positioning signals such as the PRS and the SRS.

It may be understood that the network side device in this embodiment of this application may be the first network device, or may be another network device different from the first network device. This is not limited in this embodiment of this application.

It may be understood that step S302 is an optional step. When the network side device is the first network device, step S302 may not be actually performed. It may be understood as that, in this case, the network side device obtains the second information internally, where the second information includes the information about the time difference between receiving and sending the at least two signals by the network side device. When the network side device is the another network device different from the first network device, for example, a core network device, the network side device obtains the second information according to the method in step S302, where the second information includes the information about the time difference between receiving and sending the at least two signals by the first network device.

It may be understood that execution of steps S301 and S302 is not limited to a particular sequence, and steps S301 and S302 may be performed in sequence or in parallel. This is not limited in this embodiment of this application.

In a possible embodiment, this application further provides several methods for receiving and sending of the at least two signals.

For details, refer to FIG. 4A, FIG. 4B, FIG. 5A, FIG. 5B, FIG. 6A, and FIG. 6B, FIG. 4A, FIG. 4B, FIG. 5A, FIG. 5B, FIG. 6A, and FIG. 6B are respectively diagrams of several types of signal receiving and sending according to embodiments of this application.

As shown in FIG. 4A, the at least two signals include a first signal X1 and a second signal Y1. The first signal X1 and the second signal Y1 are two signals that are transmitted between a terminal and a base station in opposite directions at different times. The base station sends the first signal X1 to the terminal. Correspondingly, the terminal receives the first signal X1 sent by the base station. Then, the terminal sends the second signal Y1 to the base station. Correspondingly, the base station receives the second signal Y1 sent by the terminal.

In this case, first information includes information about a first time difference, the first time difference includes a time difference between receiving the first signal X1 by the terminal and sending the second signal Y1 by the terminal, and the time difference is denoted as T1. Second information includes information about a second time difference, the second time difference includes a time difference between sending the first signal X1 by the base station and receiving the second signal Y1 by the base station, and the time difference is denoted as T2. T1 and T2 are for determining a first RTT corresponding to a terminal device, to position the terminal device.

As shown in FIG. 4B, the at least two signals include a first signal X2 and a second signal Y2. The first signal X2 and the second signal Y2 are two signals that are transmitted between a terminal and a base station in opposite directions at different times. The terminal sends the first signal X2 to the base station. Correspondingly, the base station receives the first signal X2 sent by the terminal. Then, the base station sends the second signal Y2 to the terminal. Correspondingly, the terminal receives the second signal Y2 sent by the base station.

In this case, first information includes information about a first time difference, the first time difference includes a time difference between sending the first signal X2 by the terminal and receiving the second signal Y2 by the terminal, and the time difference is denoted as T1. Second information includes information about a second time difference, the second time difference includes a time difference between receiving the first signal X2 by the base station and sending the second signal Y2 by the base station, and the time difference is denoted as T2. T1 and T2 are for determining a first RTT corresponding to a terminal device, to position the terminal device.

In this embodiment of this application, the RTT between the terminal and the base station can be measured based on the time difference between receiving and sending the first signal and the second signal by the terminal and the time difference between receiving and sending the first signal and the second signal by the base station, so that the terminal device is positioned.

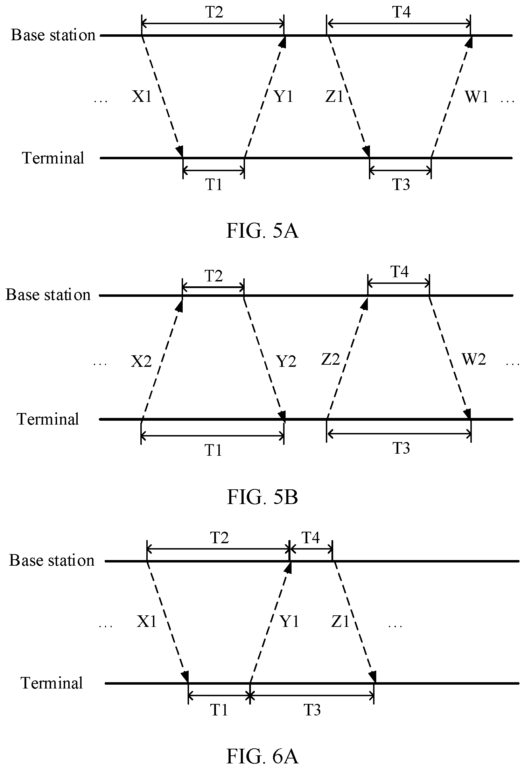

As shown in FIG. 5A, in addition to the first signal X1 and the second signal Y1, the at least two signals may further include a third signal Z1 and a fourth signal W1. The third signal Z1 and the fourth signal W1 are two signals that are transmitted between a terminal and a base station in opposite directions at different times. The base station sends the first signal X1 to the terminal. Correspondingly, the terminal receives the first signal X1 sent by the base station. Then, the terminal sends the second signal Y1 to the base station. Correspondingly, the base station receives the second signal Y1 sent by the terminal. Then, the base station sends the third signal Z1 to the terminal. Correspondingly, the terminal receives the third signal Z1 sent by the base station. Then, the terminal sends the fourth signal W1 to the base station. Correspondingly, the base station receives the fourth signal W1 sent by the terminal.

In this case, first information includes information about a first time difference, the first time difference includes a time difference between receiving the first signal X1 by the terminal and sending the second signal Y1 by the terminal, and the time difference is denoted as T1; and the first time difference further includes a time difference between receiving the third signal Z1 by the terminal and sending the fourth signal W1 by the terminal, and the time difference is denoted as T3. Second information includes information about a second time difference, the second time difference includes a time difference between sending the first signal X1 by the base station and receiving the second signal Y1 by the base station, and the time difference is denoted as T2; and the second time difference further includes a time difference between sending the third signal Z1 by the base station and receiving the fourth signal W1 by the base station, and the time difference is denoted as T4. T1, T2, T3, and T4 are for determining a first RTT corresponding to a terminal device, to position the terminal device.

As shown in FIG. 5B, in addition to the first signal X2 and the second signal Y2, the at least two signals may further include a third signal Z2 and a fourth signal W2. The third signal Z2 and the fourth signal W2 are two signals that are transmitted between a terminal and a base station in opposite directions at different times. The terminal sends the first signal X2 to the base station.

Correspondingly, the base station receives the first signal X2 sent by the terminal. Then, the base station sends the second signal Y2 to the terminal. Correspondingly, the terminal receives the second signal Y2 sent by the base station. Then, the terminal sends the third signal Z2 to the base station. Correspondingly, the base station receives the third signal Z2 sent by the terminal. Then, the base station sends the fourth signal W2 to the terminal. Correspondingly, the terminal receives the fourth signal W2 sent by the base station.

In this case, first information includes information about a first time difference, the first time difference includes a time difference between sending the first signal X2 by the terminal and receiving the second signal Y2 by the terminal, and the time difference is denoted as T1; and the first time difference further includes a time difference between sending the third signal Z2 by the terminal and receiving the fourth signal W2 by the terminal, and the time difference is denoted as T3. Second information includes information about a second time difference, the second time difference includes a time difference between receiving the first signal X2 by the base station and sending the second signal Y2 by the base station, and the time difference is denoted as T2; and the second time difference further includes a time difference between receiving the third signal Z2 by the base station and sending the fourth signal W2 by the base station, and the time difference is denoted as T4. T1, T2, T3, and T4 are for determining a first RTT corresponding to a terminal device, to position the terminal device.

In this embodiment of this application, the RTT between the terminal and the base station can be measured based on the time difference between receiving and sending the first signal and the second signal by the terminal and the time difference between receiving and sending the first signal and the second signal by the base station, and the time difference between receiving and sending the third signal and the fourth signal by the terminal and the time difference between receiving and sending the third signal and the fourth signal by the base station, so that the terminal device is positioned.

As shown in FIG. 6A, in addition to the first signal X1 and the second signal Y1, the at least two signals may further include a third signal Z1. The third signal Z1, the first signal X1, and the second signal Y1 are signals that are transmitted between a terminal and a base station at different times. The base station sends the first signal X1 to the terminal. Correspondingly, the terminal receives the first signal X1 sent by the base station. Then, the terminal sends the second signal Y1 to the base station. Correspondingly, the base station receives the second signal Y1 sent by the terminal. Then, the base station sends the third signal Z1 to the terminal. Correspondingly, the terminal receives the third signal Z1 sent by the base station.

In this case, first information includes information about a first time difference, the first time difference includes a time difference between receiving the first signal X1 by the terminal and sending the second signal Y1 by the terminal, and the time difference is denoted as T1; and the first time difference further includes a time difference between sending the second signal Y1 by the terminal and receiving the third signal Z1 by the terminal, and the time difference is denoted as T3. Second information includes information about a second time difference, the second time difference includes a time difference between sending the first signal X1 by the base station and receiving the second signal Y1 by the base station, and the time difference is denoted as T2; and the second time difference further includes a time difference between receiving the second signal Y1 by the base station and sending the third signal Z1 by the base station, and the time difference is denoted as T4. T1, T2, T3, and T4 are for determining a first RTT corresponding to a terminal device, to position the terminal device.

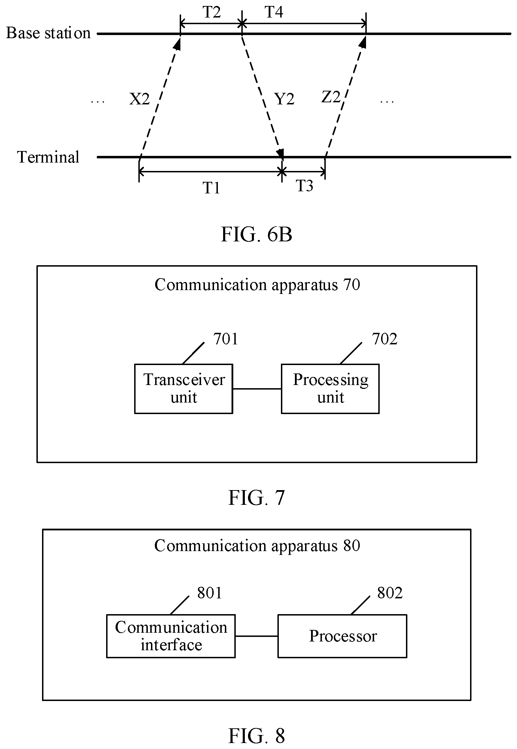

As shown in FIG. 6B, in addition to the first signal X2 and the second signal Y2, the at least two signals may further include a third signal Z2. The third signal Z2, the first signal X2, and the second signal Y2 are signals that are transmitted between a terminal and a base station at different times. The terminal sends the first signal X2 to the base station. Correspondingly, the base station receives the first signal X2 sent by the terminal. Then, the base station sends the second signal Y2 to the terminal. Correspondingly, the terminal receives the second signal Y2 sent by the base station. Then, the terminal sends the third signal Z2 to the base station. Correspondingly, the base station receives the third signal Z2 sent by the terminal.

In this case, first information includes information about a first time difference, the first time difference includes a time difference between sending the first signal X2 by the terminal and receiving the second signal Y2 by the terminal, and the time difference is denoted as T1; and the first time difference further includes a time difference between receiving the second signal Y2 by the terminal and sending the third signal Z2 by the terminal, and the time difference is denoted as T3. Second information includes information about a second time difference, the second time difference includes a time difference between receiving the first signal X2 by the base station and sending the second signal Y2 by the base station, and the time difference is denoted as T2; and the second time difference further includes a time difference between sending the second signal Y2 by the base station and receiving the third signal Z2 by the base station, and the time difference is denoted as T4. T1, T2, T3, and T4 are for determining a first RTT corresponding to a terminal device, to position the terminal device.

In this embodiment of this application, the RTT between the terminal and the base station can be measured based on the time difference between receiving and sending the first signal and the second signal by the terminal and the time difference between receiving and sending the first signal and the second signal by the base station, and the time difference between receiving and sending the second signal and the third signal by the terminal and the time difference between receiving and sending the second signal and the third signal by the base station, so that the terminal device is positioned.

It may be understood that the receiving and sending of the at least two signals shown in FIG. 4A, FIG. 4B, FIG. 5A, FIG. 5B, FIG. 6A, and FIG. 6B are several example receiving and sending methods shown in this application, and should not constitute a limitation on signal receiving and sending in embodiments of this application.

In a possible embodiment, the first time difference satisfies at least one of the following:

a time difference interval range corresponding to the first time difference is greater than a first interval range, and a time difference resolution corresponding to the first time difference is greater than a first threshold.

Specifically, the time difference interval range corresponding to the first time difference between receiving and sending the at least two signals by the terminal device is greater than the first interval range, and/or the time difference resolution corresponding to the first time difference between receiving and sending the at least two signals by the terminal device is greater than the first threshold.

It may be understood that the first interval range may be a time difference interval range corresponding to a time difference between receiving and sending the PRS and the SRS, and the first threshold may be a time difference resolution corresponding to the time difference between receiving and sending the PRS and the SRS. In this case, an allowed interval range of the time difference between receiving and sending the at least two signals is greater than an allowed interval range of the time difference between receiving and sending the PRS and the SRS, and an allowed resolution of the time difference between receiving and sending the at least two signals is also greater than an allowed resolution of the time difference between receiving and sending the PRS and the SRS.

For example, in a low earth orbit (LEO) satellite communication scenario, an orbital height of a low earth orbit satellite is usually 500 km to 2000 km, and a corresponding maximum RTT value is approximately 13.3 ms. In this case, a maximum value of an absolute value of a time difference may be increased to 15 ms. That is, the time difference ranges from -T to T, where T≤15 ms. T may also be converted into a value whose corresponding unit is Tc.

For example, in a medium orbit (MEO) satellite communication scenario, an orbital height of a medium orbit satellite is usually 8000 km to 20000 km, and a corresponding maximum RTT value is approximately 133 ms. A maximum value of a time difference may be increased to 140 ms. That is, the time difference ranges from -T to T, where T≤140 ms. T may also be converted into a value whose corresponding unit is Tc.

For example, in a geostationary orbit (GEO) satellite communication scenario, a height of a geostationary orbit satellite is usually 35786 km, and a corresponding maximum RTT value is approximately 238 ms. A maximum value of a time difference may be increased to 250 ms. That is, the time difference ranges from -T to T, where T≤250 ms. T may also be converted into a value whose corresponding unit is Tc.

It should be understood that the foregoing example satellite communication is for a communication scenario in which a base station or some functions of the base station are deployed on a satellite. If the base station is deployed on the ground, a value of T may also be correspondingly increased.

For example, in a current standard, a resolution corresponding to a reporting time difference is $2^k \times Tc$, where $0 \le k \le 5$, and a range is small. However, in the satellite communication, a requirement for terminal positioning precision is 5 km to 10 km. Therefore, a value range of the resolution may be extended. That is, a value range of a value of k may be extended. For example, the value of k may be extended to 6, 7, 8, 9, 10, 11, 12, 13 or the like.

For example, the resolution corresponding to the time difference is $2^k \times Tc$, where $0 \le k \le 5$, and a corresponding resolution unit is Tc. Tc may be changed to Ts or a corresponding symbol length, slot length, or subframe length. Another expression form may also be used for the corresponding resolution. For example, $10L \times Tc$ is used, where $0 \le L \le 400$.

Optionally, the first interval range and/or the first threshold may be specified in a protocol or preconfigured, so that the allowed interval range of the time difference between receiving and sending the at least two signals is greater than the allowed interval range of the time difference between receiving and sending the PRS and the SRS, and the allowed resolution of the time difference between receiving and sending the at least two signals is also greater than the allowed resolution of the time difference between receiving and sending the PRS and the SRS.

It may be understood that the second time difference is similar to the first time difference, and satisfies at least one of the following: a time difference interval range corresponding to the second time difference is greater than a second interval range, and a time difference resolution corresponding to the second time difference is greater than a second threshold. For details, refer to the foregoing descriptions of the first time difference. Details are not described herein again.

According to this embodiment of this application, content of the time difference interval range and the time difference resolution of the obtained first time difference is added, and the time difference interval range and the time difference resolution that correspond to the time difference between receiving and sending the at least two signals are extended, so that receiving and sending of the at least two signals within a larger time difference range and a larger resolution range are allowed. In addition, a quantity of bits occupied by the time difference between receiving and sending the at least two signals is also reduced.

In a possible embodiment, the first information further satisfies at least one of the following:
slot information corresponding to the at least two signals, and orbital height information corresponding to a first non-terrestrial device.

Specifically, the obtained first information further includes the slot information corresponding to receiving and sending of the at least two signals by the terminal device, and/or the orbital height information corresponding to the first non-terrestrial device.

It may be understood that, when the first time difference between receiving and sending the at least two signals is obtained, the slot information corresponding to a quantity of radio frames, subframes, slots, or the like in the at least two signals may be removed, and the slot information corresponding to the at least two signals is separately stored in the first information. In this way, the first time difference can be kept within a small interval range, so that receiving and sending of the at least two signals within a larger time difference range and a larger resolution range can be allowed.

For example, when the first time difference is reported, a plurality of quantities of radio frames, subframes, or slots in the at least two signals may be subtracted, so that the reported first time difference falls within the small range, for example, -0.5 ms to 0.5 ms. During reporting, the quantity of radio frames, subframes, or slots that is subtracted is separately stored in the first information for reporting, or the quantity of radio frames, subframes, or slots that is subtracted may be separately stored in other information for reporting. This is not limited in this embodiment of this application. A network side adds the received first time difference to the corresponding quantity of radio frames, subframes, or slots, to obtain a true time difference between receiving and sending the at least two signals.

It may be understood that, when the first time difference between receiving and sending the at least two signals is obtained, information about a distance between the first non-terrestrial device and any reference point may be removed. Specifically, the information about the distance may be the orbital height information corresponding to the first non-terrestrial device. The orbital height information corresponding to the first non-terrestrial device is separately stored in the first information. In this way, the first time difference can be kept within a small interval range, so that receiving and sending of the at least two signals within a larger time difference range and a larger resolution range can be allowed.

For example, because the time difference between signal sending and receiving is greater than a round trip time, when the time difference between signal sending and receiving is reported, a distance from a satellite to a reference point may be subtracted from the time difference, where for example, the distance may be the orbital height information corresponding to the first non-terrestrial device. In this way, the time difference between signal sending and receiving and a corresponding value range are reduced. During reporting, the subtracted distance from the satellite to the reference point is separately stored in the first information for reporting, or the subtracted distance from the satellite to the reference point may be separately stored in other information for reporting. This is not limited in this embodiment of this application. For example, during reporting, a corresponding orbital height H obtained from an ephemeris may be subtracted, to obtain T'_round=T_round-2*H/C, where C is a speed of light, T_round is a time difference between signal sending and receiving, and T'_round is a time difference between signal sending and receiving from which the round trip time is subtracted. In addition, the subtracted orbital height H is separately stored in the first information for reporting, or the subtracted orbital height H is separately stored in other information for reporting. When receiving T'_round, the network side may add T'_round and the corresponding orbital height H, to obtain true T_round=T'_round+2*H/C.

It may be understood that the second information is similar to the first information, and satisfies at least one of the following: the slot information corresponding to the at least two signals and the orbital height information corresponding to the first non-terrestrial device. For details, refer to the foregoing descriptions of the first information. Details are not described herein again.

According to this embodiment of this application, the slot information corresponding to the at least two signals and/or the orbital height information corresponding to the first non-terrestrial device are/is separately stored in the first information. In this way, the first time difference can be kept within a small interval range, so that receiving and sending of the at least two signals within a larger time difference range and a larger resolution range can be allowed.

In a possible embodiment, the at least two signals may further include two or more of a first message Msg1, a second message Msg2, a third message Msg3, and a fourth message Msg4 in a four-step random access procedure; or the at least two signals may further include a first message MsgA and a second message MsgB in a two-step random access procedure.

Specifically, the RTT between the terminal device and the network device is measured in the random access procedure or before and after authentication starts, that is, based on receiving and sending of the at least two signals. In this case, the at least two signals may include two or more of the first message Msg1, the second message Msg2, the third message Msg3, and the fourth message Msg4 in the four-step random access procedure; or the at least two signals may include the first message MsgA and the second message MsgB in the two-step random access procedure.

For example, as shown in FIG. 5B, the at least two signals include a first message Msg1 (the signal X2), a second message Msg2 (the signal Y2), a third message Msg3 (the signal Z2), and a fourth message Msg4 (the signal W2) in the four-step random access procedure.

In the four-step random access procedure, the terminal sends a preamble, that is, the first message Msg1 (the signal X2), to the base station, the base station sends a random access response, that is, the second message Msg2 (the signal Y2), to the terminal, the terminal sends the third message Msg3 (the signal Z2) to the base station, and the base station sends the fourth message Msg4 (the signal W2) to the terminal. In this case, the RTT between the terminal and the base station may be measured by recording time differences between receiving and sending of the Msg1, the Msg2, the Msg3, and the Msg4, so that the terminal device is positioned.

For example, as shown in FIG. 4B, the at least two signals include a first message MsgA (the signal X2) and a second message MsgB (the signal Y2) in the two-step random access procedure.

In the two-step random access procedure, the terminal sends the first message MsgA (the signal X2) to the base station, and the base station sends the second message MsgB (the signal Y2) to the terminal. In this case, the RTT between the terminal and the base station may be measured by recording time differences between receiving and sending of the MsgA and the MsgB, so that the terminal device is positioned.

According to this embodiment of this application, any two or more messages in the two-step random access procedure or the four-step random access procedure are received and sent, to measure the RTT between the terminal device and the network device. In this way, the network side device does not need to additionally configure related information for the at least two signals. In other words, the related information does not need to be additionally configured to indicate the terminal device to record and report the first time difference between receiving and sending the at least two signals, so that the transmission resources consumed by the at least two signals are further reduced. This reduces a positioning delay, reduces signaling overheads of signal transmission and occupation of time-frequency resources, and improves positioning efficiency.

In a possible embodiment, the at least two signals may further include a channel state information-reference signal CSI-RS and a feedback signal corresponding to the CSI-RS.

For example, as shown in FIG. 4A, the at least two signals may include a channel state information-reference signal CSI-RS (the signal X1) and a feedback signal (the signal Y1) corresponding to the CSI-RS.

According to this embodiment of this application, the RTT measurement is bound to the CSI-RS and the feedback signal corresponding to the CSI-RS, and the RTT between the terminal device and the network device is measured based on receiving and sending of the CSI-RS and the feedback signal corresponding to the CSI-RS. In this way, the network side device does not need to additionally configure related information for the at least two signals. In other words, the related information does not need to be additionally configured to indicate the terminal device to record and report the first time difference between receiving and sending the at least two signals, so that the transmission resources consumed by the at least two signals are further reduced. This reduces a positioning delay, reduces signaling overheads of signal transmission and occupation of time-frequency resources, and improves positioning efficiency.

In a possible embodiment, the network side device further sends a first request and a second request.

The first request is for requesting to obtain the first information of the terminal device, and the second request is for requesting to obtain the second information of the first network device.

Specifically, the first request may indicate the terminal device to record and report the time difference between receiving and sending the at least two signals, and the second request may indicate the first network device to record and report the time difference between receiving and sending the at least two signals.

Optionally, when the network side device is the first network device, the step of sending the second request to the first network device is not actually performed. It may be understood as that, in this case, the network side device obtains the second information internally, where the second information includes the information about the time difference between receiving and sending the at least two signals by the network side device.

Optionally, when the network side device is another network device different from the first network device, for example, a core network device, the network side device requests to obtain the second information of the first network device according to the method of sending the second request to the first network device in this step, where the second information includes the information about the time difference between receiving and sending the at least two signals by the first network device.

Optionally, when the at least two signals include two or more of the first message Msg1, the second message Msg2, the third message Msg3, and the fourth message Msg4 in the four-step random access procedure, when the at least two signals include the first message MsgA and the second message MsgB in the two-step random access procedure, or when the at least two signals include the channel state information-reference signal CSI-RS and the feedback signal corresponding to the CSI-RS, the network side device does not need to additionally configure the related information for the at least two signals. In other words, the related information does not need to be additionally configured to indicate the terminal device to record and report the first time difference between receiving and sending the at least two signals, and the related information does not need to be additionally configured to indicate the first network device to record and report the second time difference between receiving and sending the at least two signals. Therefore, the step of sending the first request to the terminal device may not be actually performed, and the step of sending the second request to the first network device may not be actually performed.

According to this embodiment of this application, the time difference between receiving and sending the at least two signals by the terminal device and the time difference between receiving and sending the at least two signals by the first network device can be obtained, and the RTT between the terminal device and the network device can be measured, so that the terminal device is positioned.

S303: The network side device determines, based on the first information and the second information, a first RTT corresponding to the terminal device.

The network side device determines, based on the information about the first time difference included in the first information and the information about the second time difference included in the second information, the first RTT corresponding to the terminal device.

For example, when the at least two signals are received and sent as shown in FIG. 4A, the first information includes the information about the first time difference, the first time difference includes the time difference between receiving the first signal X1 by the terminal and sending the second signal Y1 by the terminal, and the time difference is denoted as T1. The second information includes the information about the second time difference, the second time difference includes the time difference between sending the first signal X1 by the base station and receiving the second signal Y1 by the base station, and the time difference is denoted as T2. It is determined, based on T1 and T2, that the first RTT corresponding to the terminal device is T2-T1. The first RTT is for positioning the terminal device.

For example, when the at least two signals are received and sent as shown in FIG. 4B, the first information includes the information about the first time difference, the first time difference includes the time difference between sending the first signal X2 by the terminal and receiving the second signal Y2 by the terminal, and the time difference is denoted as T1. The second information includes the information about the second time difference, the second time difference includes the time difference between receiving the first signal X2 by the base station and sending the second signal Y2 by the base station, and the time difference is denoted as T2. It is determined, based on T1 and T2, that the first RTT corresponding to the terminal device is T1-T2. The first RTT is for positioning the terminal device.

For example, when the at least two signals are received and sent as shown in FIG. 5A, the first information includes the information about the first time difference, the first time difference includes the time difference between receiving the first signal X1 by the terminal and sending the second signal Y1 by the terminal, and the time difference is denoted as T1; and the first time difference further includes the time difference between receiving the third signal Z1 by the terminal and sending the fourth signal W1 by the terminal, and the time difference is denoted as T3. The second information includes the information about the second time difference, the second time difference includes the time difference between sending the first signal X1 by the base station and receiving the second signal Y1 by the base station, and the time difference is denoted as T2; and the second time difference further includes the time difference between sending the third signal Z1 by the base station and receiving the fourth signal W1 by the base station, and the time difference is denoted as T4. It is determined, based on T1, T2, T3, and T4, that the first RTT corresponding to the terminal device is

$$\frac{T2*T4-T1*T3}{T1+T2+T3+T4}*2$$

. The first RTT is for positioning the terminal device.

For example, when the at least two signals are received and sent as shown in FIG. 5B, the first information includes the information about the first time difference, the first time difference includes the time difference between sending the first signal X2 by the terminal and receiving the second signal Y2 by the terminal, and the time difference is denoted as T1; and the first time difference further includes the time difference between sending the third signal Z2 by the terminal and receiving the fourth signal W2 by the terminal, and the time difference is denoted as T3. The second information includes the information about the second time difference, the second time difference includes the time difference between receiving the first signal X2 by the base station and sending the second signal Y2 by the base station, and the time difference is denoted as T2; and the second time difference further includes the time difference between receiving the third signal Z2 by the base station and sending the fourth signal W2 by the base station, and the time difference is denoted as T4. It is determined, based on T1, T2, T3, and T4, that the first RTT corresponding to the terminal device is

$$\frac{T1*T3-T2*T4}{T1+T2+T3+T4}*2$$

. The first RTT is for positioning the terminal device.

For example, when the at least two signals are received and sent as shown in FIG. 6A, the first information includes the information about the first time difference, the first time difference includes the time difference between receiving the first signal X1 by the terminal and sending the second signal Y1 by the terminal, and the time difference is denoted as T1; and the first time difference further includes the time difference between sending the second signal Y1 by the terminal and receiving the third signal Z1 by the terminal, and the time difference is denoted as T3. The second information includes the information about the second time difference, the second time difference includes the time difference between sending the first signal X1 by the base station and receiving the second signal Y1 by the base station, and the time difference is denoted as T2; and the second time difference further includes the time difference between receiving the second signal Y1 by the base station and sending the third signal Z1 by the base station, and the time difference is denoted as T4. It is determined, based on T1, T2, T3, and T4, that the first RTT corresponding to the terminal device is $\frac{T\ 2 * T\ 3 - T\ 1 * T4}{T1 + T2 + T3 + T4} * 2$. The first RTT is for positioning the terminal device.

For example, when the at least two signals are received and sent as shown in FIG. 6B, the first information includes the information about the first time difference, the first time difference includes the time difference between sending the first signal X2 by the terminal and receiving the second signal Y2 by the terminal, and the time difference is denoted as T1; and the first time difference further includes the time difference between receiving the second signal Y2 by the terminal and sending the third signal Z2 by the terminal, and the time difference is denoted as T3. The second information includes the information about the second time difference, the second time difference includes the time difference between receiving the first signal X2 by the base station and sending the second signal Y2 by the base station, and the time difference is denoted as T2; and the second time difference further includes the time difference between sending the second signal Y2 by the base station and receiving the third signal Z2 by the base station, and the time difference is denoted as T4. It is determined, based on T1, T2, T3, and T4, that the first RTT corresponding to the terminal device is $\frac{T\ 1 * T\ 4 - T\ 2 * T3}{T1 + T2 + T3 + T4} * 2$. The first RTT is for positioning the terminal device.

S304: The network side device positions the terminal device based on the first RTT.

It may be understood that, in this step, positioning the terminal device based on the first RTT does not mean positioning the terminal device only based on one RTT value. In an actual positioning scenario, a plurality of RTTs between the terminal device and the network device may be obtained through measurement according to the method in steps S301 to S303, and the terminal device is positioned based on the plurality of RTTs. A specific quantity of RTTs for positioning is not limited in this embodiment of this application.

Optionally, that the network side device positions the terminal device based on the RTT obtained through measurement may be specifically: verifying, based on the RTT obtained through measurement, location information reported by the terrestrial terminal device, so that the terminal device is positioned.

According to this embodiment of this application, based on the method for positioning a terminal by a single non-terrestrial device, the time difference between receiving and sending the at least two signals by the terminal device and the time difference between receiving and sending the at least two signals by the network device can be obtained, and the RTT between the terminal device and the network device can be measured, so that the terminal device is positioned.

In addition, in comparison with measuring the RTT between the terminal device and the network device based on receiving and sending of the PRS and the SRS, in this embodiment of this application, the RTT between the terminal device and the network device is measured based on receiving and sending of the at least two signals. In this way, related positioning resources do not need to be specially configured for the positioning signals such as the PRS and the SRS, the signal configuration is simpler and more flexible, the positioning complexity is low, the transmission resources consumed by the at least two signals are fewer than the transmission resources consumed by the PRS and the SRS, the positioning delay is reduced, the signaling overheads of the signal transmission and the occupation of the time-frequency resources are reduced, and the positioning efficiency is improved.

Optionally, in this embodiment of this application, in addition to obtaining the first information and the second information, the network side device further obtains third information, and determines, based on the first information, the second information, and the third information, the first RTT corresponding to the terminal device, where the first RTT is for positioning the terminal device.

The obtained third information includes information about a time difference between receiving and sending at least two signals by at least one second network device, the at least one second network device is a network device corresponding to at least one second non-terrestrial device, and the at least two signals include any two signals that are transmitted between the terminal device and the at least one second network device in opposite directions at different times. In addition, transmission resources consumed by the at least two signals are fewer than the transmission resources consumed by the PRS and the SRS.

It may be understood that, correspondingly, in this case, in addition to the information about the time difference between receiving and sending the at least two signals that are transmitted between the terminal device and the first network device, the first information further includes the information about the time difference between receiving and sending the at least two signals that are transmitted between the terminal device and the at least one second network device.

It may be understood that the at least one second network device in this embodiment of this application is a device equipped with a processor that can be configured to execute computer-executable instructions, may be specifically the base station in FIG. 1A, FIG. 1B, or FIG. 1C, and is configured to perform the positioning method in this embodiment of this application, to position the terminal device.

According to this embodiment of this application, based on the method for positioning the terminal by a plurality of non-terrestrial devices, time differences between receiving and sending of the at least two signals by the terminal device and a plurality of network devices can be obtained, and the RTTs between the terminal device and the plurality of network devices can be measured, so that the terminal device is positioned.

In addition, in comparison with measuring the RTT between the terminal device and the network device based on receiving and sending of the PRS and the SRS, in this embodiment of this application, the RTT between the terminal device and the network device is measured based on receiving and sending of the at least two signals. In this way, the related positioning resources do not need to be specially configured for the positioning signals such as the PRS and the SRS, the signal configuration is simpler and more flexible, the positioning complexity is low, the transmission resources consumed by the at least two signals are fewer than the transmission resources consumed by the PRS and the SRS, the positioning delay is reduced, the signaling overheads of the signal transmission and the occupation of the time-frequency resources are reduced, and the positioning efficiency is improved.

The foregoing describes in detail the methods provided in embodiments of this application. The following provides an apparatus for implementing any one of the methods in embodiments of this application. For example, an apparatus is provided, and includes units (or means) configured to implement steps performed by a device in any one of the foregoing methods.

FIG. 7 is a diagram of a structure of a communication apparatus according to an embodiment of this application.

As shown in FIG. 7, the communication apparatus 70 may include a transceiver unit 701 and a processing unit 702. The transceiver unit 701 and the processing unit 702 may be software, hardware, or a combination of software and hardware.

The transceiver unit 701 may implement a sending function and/or a receiving function, and the transceiver unit 701 may also be described as a communication unit. Alternatively, the transceiver unit 701 may be a unit integrating an obtaining unit and a sending unit. The obtaining unit is configured to implement a receiving function, and the sending unit is configured to implement a sending function. Optionally, the transceiver unit 701 may be configured to receive information sent by another apparatus, and may be further configured to send information to another apparatus.

In a possible design, the communication apparatus 70 may correspond to the network side device in the method embodiment shown in FIG. 3. For example, the communication apparatus 70 may be the network side device, or may be a chip in the network side device. The communication apparatus 70 may include units configured to perform operations performed by the network side device in the foregoing method embodiment shown in FIG. 3. In addition, the units in the communication apparatus 70 are separately configured to implement the operations performed by the network side device in the foregoing method embodiment shown in FIG. 3. The units are described as follows.

The processing unit 702 is configured to obtain first information and second information by using the transceiver unit 701, where the first information includes information about a first time difference, the first time difference includes a time difference between receiving and sending at least two signals by a terminal device, the second information includes information about a second time difference, the second time difference includes a time difference between receiving and sending the at least two signals by a first network device, the at least two signals include any two signals that are transmitted between the terminal device and the first network device in opposite directions at different times, transmission resources consumed by the at least two signals are fewer than transmission resources consumed by a positioning reference signal PRS and a sounding reference signal SRS, and the first network device is a network device corresponding to a first non-terrestrial device.

The processing unit 702 is further configured to determine, based on the first information and the second information, a first round trip time RTT corresponding to the terminal device.

The processing unit 702 is further configured to position the terminal device based on the first RTT.

In a possible implementation, the first time difference satisfies at least one of the following:
a time difference interval range corresponding to the first time difference is greater than a first interval range, and a time difference resolution corresponding to the first time difference is greater than a first threshold.

In a possible implementation, the first information further includes at least one of the following:
slot information corresponding to the at least two signals, and orbital height information corresponding to the first non-terrestrial device.

In a possible implementation, the at least two signals include two or more of a first message Msg1, a second message Msg2, a third message Msg3, and a fourth message Msg4 in a four-step random access procedure; or the at least two signals include a first message MsgA and a second message MsgB in a two-step random access procedure.

In a possible implementation, the at least two signals include a channel state information-reference signal CSI-RS and a feedback signal corresponding to the CSI-RS.

In a possible implementation, the processing unit 702 is further configured to obtain third information by using the transceiver unit 701, where the third information includes information about a third time difference, the third time difference includes a time difference between receiving and sending at least two signals by at least one second network device, the at least two signals include any two signals that are transmitted between the terminal device and the at least one second network device in opposite directions at different times, transmission resources consumed by the at least two signals are fewer than the transmission resources consumed by the positioning reference signal PRS and the sounding reference signal SRS, and the at least one second network device is a network device corresponding to at least one second non-terrestrial device.

The processing unit 702 is specifically configured to determine, based on the first information, the second information, and the third information, the first RTT corresponding to the terminal device.

In a possible implementation, the at least two signals include a first signal and a second signal, and the first signal and the second signal are two signals that are transmitted between the terminal device and the first network device in opposite directions at different times, where

the first time difference includes a time difference between receiving the first signal by the terminal device and sending the second signal by the terminal device, and the second time difference includes a time difference between sending the first signal by the first network device and receiving the second signal by the first network device; or
the first time difference includes a time difference between sending the first signal by the terminal device and receiving the second signal by the terminal device, and the second time difference includes a time difference between receiving the first signal by the first network device and sending the second signal by the first network device.

In a possible implementation, the at least two signals further include a third signal and a fourth signal, and the third signal, the fourth signal, the first signal, and the second signal are signals transmitted between the terminal device and the first network device at different times, where

the first time difference further includes a time difference between sending the third signal by the terminal device and receiving the fourth signal by the terminal device, and the second time difference further includes a time difference between receiving the third signal by the first network device and sending the fourth signal by the first network device; or
the first time difference further includes a time difference between receiving the third signal by the terminal device and sending the fourth signal by the terminal device, and the second time difference further includes a time difference between sending the third signal by the first network device and receiving the fourth signal by the first network device.

In a possible implementation, the at least two signals further include a third signal, and the third signal, the first signal, and the second signal are signals transmitted between the terminal device and the first network device at different times, where

the first time difference further includes a time difference between sending the second signal by the terminal device and receiving the third signal by the terminal device, and the second time difference further includes a time difference between receiving the second signal by the first network device and sending the third signal by the first network device; or
the first time difference further includes a time difference between receiving the second signal by the terminal device and sending the third signal by the terminal device, and the second time difference further includes a time difference between sending the second signal by the first network device and receiving the third signal by the first network device.

In a possible implementation, the transceiver unit 701 is further configured to send a first request and a second request, where the first request is for requesting to obtain the first information of the terminal device, and the second request is for requesting to obtain the second information of the first network device.

In another possible design, the communication apparatus 70 may correspond to the terminal device in the method embodiment shown in FIG. 3. For example, the communication apparatus 70 may be the terminal device, or may be a chip in the terminal device. The communication apparatus 70 may include units configured to perform operations performed by the terminal device in the foregoing method embodiment shown in FIG. 3. In addition, the units in the communication apparatus 70 are separately configured to implement the operations performed by the terminal device in the foregoing method embodiment shown in FIG. 3. The units are described as follows.

The processing unit 702 is configured to obtain first information, where the first information includes information about a first time difference, the first time difference includes a time difference between receiving and sending at least two signals by the communication apparatus, the at least two signals include any two signals that are transmitted between the communication apparatus and a first network device in opposite directions at different times, transmission resources consumed by the at least two signals are fewer than transmission resources consumed by a positioning reference signal PRS and a sounding reference signal SRS, and the first network device is a network device corresponding to a first non-terrestrial device.

The transceiver unit 701 is configured to send the first information, where the first information is for determining a first round trip time RTT corresponding to the communication apparatus, and the first RTT is for positioning the communication apparatus.

In a possible implementation, the first time difference satisfies at least one of the following:

a time difference interval range corresponding to the first time difference is greater than a first interval range, and a time difference resolution corresponding to the first time difference is greater than a first threshold.

In a possible implementation, the first information further includes at least one of the following:

slot information corresponding to the at least two signals, and orbital height information corresponding to the first non-terrestrial device.

In a possible implementation, the at least two signals include two or more of a first message Msg1, a second message Msg2, a third message Msg3, and a fourth message Msg4 in a four-step random access procedure; or the at least two signals include a first message MsgA and a second message MsgB in a two-step random access procedure.

In a possible implementation, the at least two signals include a channel state information-reference signal CSI-RS and a feedback signal corresponding to the CSI-RS.

In a possible implementation, the at least two signals include a first signal and a second signal, and the first signal and the second signal are two signals transmitted between the communication apparatus and the first network device in opposite directions at different times, where

the first time difference includes a time difference between receiving the first signal by the communication apparatus and sending the second signal by the communication apparatus; or
the first time difference includes a time difference between sending the first signal by the communication apparatus and receiving the second signal by the communication apparatus.

In a possible implementation, the at least two signals further include a third signal and a fourth signal, and the third signal, the fourth signal, the first signal, and the second signal are signals transmitted between the communication apparatus and the first network device at different times, where

the first time difference further includes a time difference between sending the third signal by the communication apparatus and receiving the fourth signal by the communication apparatus; or
the first time difference further includes a time difference between receiving the third signal by the communication apparatus and sending the fourth signal by the communication apparatus.

In a possible implementation, the at least two signals further include a third signal, and the third signal, the first signal, and the second signal are signals transmitted between the communication apparatus and the first network device at different times, where

the first time difference further includes a time difference between sending the second signal by the communication apparatus and receiving the third signal by the communication apparatus; or
the first time difference further includes a time difference between receiving the second signal by the communication apparatus and sending the third signal by the communication apparatus.

In a possible implementation, the transceiver unit 701 is further configured to receive a first request, where the first request is for requesting to obtain the first information of the communication apparatus.

In this embodiment of this application, a part or all of the units of the apparatus shown in FIG. 7 may be combined into one or more other units, or one (or more) of the units may be divided into a plurality of smaller functional units. In this way, same operations can be implemented without affecting implementation of technical effects of embodiments of this application. The foregoing units are obtained through division based on logical functions. In actual application, a function of one unit may be implemented by a plurality of units, or functions of a plurality of units may be implemented by one unit. In another embodiment of this application, the electronic device may further include another unit. In actual application, the functions may be implemented with assistance of the another unit, and may be implemented by a plurality of units in collaboration.

It should be noted that, for implementations of the units, refer to corresponding descriptions of the method embodiment shown in FIG. 3.

In the communication apparatus 70 described in FIG. 7, based on the method for positioning a terminal by a single non-terrestrial device, the time difference between receiving and sending the at least two signals by the terminal device and the time difference between receiving and sending the at least two signals by the network device can be obtained, and the RTT between the terminal device and the network device can be measured, so that the terminal device is positioned.

FIG. 8 is a diagram of a structure of a communication apparatus according to an embodiment of this application.

It should be understood that the communication apparatus 80 shown in FIG. 8 is merely an example. The communication apparatus in this embodiment of this application may further include another component, or include a component with a function similar to that of a component in FIG. 8, or does not necessarily need to include all components in FIG. 8.

The communication apparatus 80 includes a communication interface 801 and at least one processor 802.

The communication apparatus 80 may correspond to any network element or device in a network side device or a terminal device. The communication interface 801 is configured to receive and send signals, and the at least one processor 802 executes program instructions, to enable the communication apparatus 80 to implement a corresponding procedure of a method performed by a corresponding device in the foregoing method embodiment.

In a possible design, the communication apparatus 80 may correspond to the network side device in the method embodiment shown in FIG. 3. For example, the communication apparatus 80 may be the network side device, or may be a chip in the network side device. The communication apparatus 80 may include components configured to perform operations performed by the network side device in the foregoing method embodiment. In addition, the components in the communication apparatus 80 are separately configured to implement the operations performed by the network side device in the foregoing method embodiment. Details may be as follows:

obtaining first information and second information, where the first information includes information about a first time difference, the first time difference includes a time difference between receiving and sending at least two signals by a terminal device, the second information includes information about a second time difference, the second time difference includes a time difference between receiving and sending the at least two signals by a first network device, the at least two signals include any two signals that are transmitted between the terminal device and the first network device in opposite directions at different times, transmission resources consumed by the at least two signals are fewer than transmission resources consumed by a positioning reference signal PRS and a sounding reference signal SRS, and the first network device is a network device corresponding to a first non-terrestrial device; determining, based on the first information and the second information, a first round trip time RTT corresponding to the terminal device; and positioning the terminal device based on the first RTT.

In a possible implementation, the first time difference satisfies at least one of the following: a time difference interval range corresponding to the first time difference is greater than a first interval range, and a time difference resolution corresponding to the first time difference is greater than a first threshold.

In a possible implementation, the first information further includes at least one of the following: slot information corresponding to the at least two signals, and orbital height information corresponding to the first non-terrestrial device.

In a possible implementation, the at least two signals include two or more of a first message Msg1, a second message Msg2, a third message Msg3, and a fourth message Msg4 in a four-step random access procedure; or the at least two signals include a first message MsgA and a second message MsgB in a two-step random access procedure.

In a possible implementation, the at least two signals include a channel state information-reference signal CSI-RS and a feedback signal corresponding to the CSI-RS.

In a possible implementation, the method further includes:

obtaining third information, where the third information includes information about a third time difference, the third time difference includes a time difference between receiving and sending at least two signals by at least one second network device, the at least two signals include any two signals that are transmitted between the terminal device and the at least one second network device in opposite directions at different times, transmission resources consumed by the at least two signals are fewer than the transmission resources consumed by the positioning reference signal PRS and the sounding reference signal SRS, and the at least one second network device is a network device corresponding to at least one second non-terrestrial device; and the determining, based on the first information and the second information, a first round trip time RTT corresponding to the terminal device includes: determining, based on the first information, the second information, and the third information, the first RTT corresponding to the terminal device.

In a possible implementation, the at least two signals include a first signal and a second signal, and the first signal and the second signal are two signals that are transmitted between the terminal device and the first network device in opposite directions at different times, where

the first time difference includes a time difference between receiving the first signal by the terminal device and sending the second signal by the terminal device, and the second time difference includes a time difference between sending the first signal by the first network device and receiving the second signal by the first network device; or the first time difference includes a time difference between sending the first signal by the terminal device and receiving the second signal by the terminal device, and the second time difference includes a time difference between receiving the first signal by the first network device and sending the second signal by the first network device.

In a possible implementation, the at least two signals further include a third signal and a fourth signal, and the third signal, the fourth signal, the first signal, and the second signal are signals transmitted between the terminal device and the first network device at different times, where

the first time difference further includes a time difference between sending the third signal by the terminal device and receiving the fourth signal by the terminal device, and the second time difference further includes a time difference between receiving the third signal by the first network device and sending the fourth signal by the first network device; or the first time difference further includes a time difference between receiving the third signal by the terminal device and sending the fourth signal by the terminal device, and the second time difference further includes a time difference between sending the third signal by the first network device and receiving the fourth signal by the first network device.

In a possible implementation, the at least two signals further include a third signal, and the third signal, the first signal, and the second signal are signals transmitted between the terminal device and the first network device at different times, where

the first time difference further includes a time difference between sending the second signal by the terminal device and receiving the third signal by the terminal device, and the second time difference further includes a time difference between receiving the second signal by the first network device and sending the third signal by the first network device; or the first time difference further includes a time difference between receiving the second signal by the terminal device and sending the third signal by the terminal device, and the second time difference further includes a time difference between sending the second signal by the first network device and receiving the third signal by the first network device.

In a possible implementation, the method further includes:
sending a first request and a second request, where the first request is for requesting to obtain the first information of the terminal device, and the second request is for requesting to obtain the second information of the first network device.

In another possible design, the communication apparatus 80 may correspond to the terminal device in the method embodiment shown in FIG. 3. For example, the communication apparatus 80 may be the terminal device, or may be a chip in the terminal device. The communication apparatus 80 may include components configured to perform operations performed by the terminal device in the foregoing method embodiment. In addition, the components in the communication apparatus 80 are separately configured to implement the operations performed by the terminal device in the foregoing method embodiment. Details may be as follows:

A terminal device obtains first information, where the first information includes information about a first time difference, the first time difference includes a time difference between receiving and sending at least two signals by the terminal device, the at least two signals include any two signals that are transmitted between the terminal device and a first network device in opposite directions at different times, transmission resources consumed by the at least two signals are fewer than transmission resources consumed by a positioning reference signal PRS and a sounding reference signal SRS, and the first network device is a network device corresponding to a first non-terrestrial device; and
the terminal device sends the first information, where the first information is for determining a first round trip time RTT corresponding to the terminal device, and the first RTT is for positioning the terminal device.

In a possible implementation, the first time difference satisfies at least one of the following:
a time difference interval range corresponding to the first time difference is greater than a first interval range, and a time difference resolution corresponding to the first time difference is greater than a first threshold.

In a possible implementation, the first information further includes at least one of the following:
slot information corresponding to the at least two signals, and orbital height information corresponding to the first non-terrestrial device.

In a possible implementation, the at least two signals include two or more of a first message Msg1, a second message Msg2, a third message Msg3, and a fourth message Msg4 in a four-step random access procedure; or the at least two signals include a first message MsgA and a second message MsgB in a two-step random access procedure.

In a possible implementation, the at least two signals include a channel state information-reference signal CSI-RS and a feedback signal corresponding to the CSI-RS.

In a possible implementation, the at least two signals include a first signal and a second signal, and the first signal and the second signal are two signals that are transmitted between the terminal device and the first network device in opposite directions at different times, where

the first time difference includes a time difference between receiving the first signal by the terminal device and sending the second signal by the terminal device; or

the first time difference includes a time difference between sending the first signal by the terminal device and receiving the second signal by the terminal device.

In a possible implementation, the at least two signals further include a third signal and a fourth signal, and the third signal, the fourth signal, the first signal, and the second signal are signals transmitted between the terminal device and the first network device at different times, where

the first time difference further includes a time difference between sending the third signal by the terminal device and receiving the fourth signal by the terminal device; or
the first time difference further includes a time difference between receiving the third signal by the terminal device and sending the fourth signal by the terminal device.

In a possible implementation, the at least two signals further include a third signal, and the third signal, the first signal, and the second signal are signals transmitted between the terminal device and the first network device at different times, where

the first time difference further includes a time difference between sending the second signal by the terminal device and receiving the third signal by the terminal device; or
the first time difference further includes a time difference between receiving the second signal by the terminal device and sending the third signal by the terminal device.

In a possible implementation, the method further includes:
receiving a first request, where the first request is for requesting to obtain the first information of the terminal device.

In the communication apparatus 80 described in FIG. 8, based on the method for positioning a terminal by a single non-terrestrial device, the time difference between receiving and sending the at least two signals by the terminal device and the time difference between receiving and sending the at least two signals by the network device can be obtained, and the RTT between the terminal device and the network device can be measured, so that the terminal device is positioned.

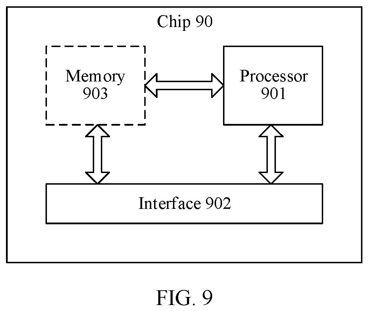

When the communication apparatus may be a chip or a chip system, refer to a diagram of a structure of a chip shown in FIG. 9.

As shown in FIG. 9, the chip 90 includes a processor 901 and an interface 902. There may be one or more processors 901 and a plurality of interfaces 902. It should be noted that a function corresponding to each of the processor 901 and the interface 902 may be implemented by using a hardware design, may be implemented by using a software design, or may be implemented by combining software and hardware. This is not limited herein.

Optionally, the chip 90 may further include a memory 903, and the memory 903 is configured to store necessary program instructions and data.

In this application, the processor 901 may be configured to invoke, from the memory 903, a program for implementing, on one or more devices or network elements of the terminal device and the network side device, the communication method provided in one or more embodiments of this application, and execute instructions included in the program. The interface 902 may be configured to output an execution result of the processor 901. In this application, the interface 902 may be specifically configured to output messages or information of the processor 901.

For the communication method provided in one or more embodiments of this application, refer to the foregoing embodiments shown in FIG. 3. Details are not described herein again.

The processor in embodiments of this application may be a central processing unit (Central Processing Unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

The memory in embodiments of this application is configured to provide storage space, and the storage space may store data such as an operating system and a computer program. The memory includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

According to the method provided in embodiments of this application, an embodiment of this application further provides a computer-readable storage medium. The computer-readable storage medium stores a computer program. When the computer program is run on one or more processors, the method shown in FIG. 3 may be implemented.

According to the method provided in embodiments of this application, an embodiment of this application further provides a computer program product. The computer program product includes a computer program. When the computer program is run on a processor, the method shown in FIG. 3 may be implemented.

An embodiment of this application further provides a system. The system includes at least one of the communication apparatus 70, the communication apparatus 80, or the chip 90, and is configured to perform steps performed by a corresponding device in any embodiment in FIG. 3.

An embodiment of this application further provides a system. The system includes a network device and a terminal device. The network device is configured to perform steps performed by a corresponding network side device in any embodiment in FIG. 3, and the terminal device is configured to perform steps performed by a corresponding terminal device in any embodiment in FIG. 3.

An embodiment of this application further provides a processing apparatus, including a processor and an interface. The processor is configured to perform the method in any one of the foregoing method embodiments.

It should be understood that the processing apparatus may be a chip. For example, the processing apparatus may be a field programmable gate array (field programmable gate array, FPGA), or may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, may be a system on chip (system on chip, SoC), may be a central processor unit (central processor unit, CPU), may be a network processor (network processor, NP), may be a digital signal processing circuit (digital signal processor, DSP), may be a micro controller unit (micro controller unit, MCU), and may be a programmable logic device (programmable logic device, PLD) or another integrated chip. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state drive, SSD)), or the like.

The units in the foregoing apparatus embodiments totally correspond to electronic devices in the method embodiments, and corresponding modules or units perform corresponding steps. For example, the communication unit (transceiver) performs receiving or sending steps in the method embodiments, and steps other than sending and receiving may be performed by the processing unit (processor). For a function of a specific unit, refer to a corresponding method embodiment. There may be one or more processors.

It may be understood that in embodiments of this application, the electronic device may perform some or all steps in embodiments of this application. These steps or operations are merely examples. In embodiments of this application, other operations or variations of various operations may be performed. In addition, the steps may be performed in a sequence different from a sequence presented in embodiments of this application, and not all the operations in embodiments of this application may be performed.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

**Claims**

1.  A positioning method, comprising:

    obtaining first information and second information, wherein the first information comprises information about a first time difference, the first time difference comprises a time difference between receiving and sending at least two signals by a terminal device, the second information comprises information about a second time difference, the second time difference comprises a time difference between receiving and sending the at least two signals by a first network device, the at least two signals comprise any two signals that are transmitted between the terminal device and the first network device in opposite directions at different times, transmission resources consumed by the at least two signals are fewer than transmission resources consumed by a positioning reference signal PRS and a sounding reference signal SRS, and the first network device is a network device corresponding to a first non-terrestrial device;

determining, based on the first information and the second information, a first round trip time RTT corresponding to the terminal device; and positioning the terminal device based on the first RTT.

2. The method according to claim 1, wherein the first time difference satisfies at least one of the following: a time difference interval range corresponding to the first time difference is greater than a first interval range, and a time difference resolution corresponding to the first time difference is greater than a first threshold.

3. The method according to claim 1 or 2, wherein the first information further comprises at least one of the following: slot information corresponding to the at least two signals, and orbital height information corresponding to the first non-terrestrial device.

4. The method according to any one of claims 1 to 3, wherein the at least two signals comprise two or more of a first message Msg1, a second message Msg2, a third message Msg3, and a fourth message Msg4 in a four-step random access procedure; or the at least two signals comprise a first message MsgA and a second message MsgB in a two-step random access procedure.

5. The method according to any one of claims 1 to 3, wherein the at least two signals comprise a channel state information-reference signal CSI-RS and a feedback signal corresponding to the CSI-RS.

6. The method according to any one of claims 1 to 5, wherein the method further comprises:

obtaining third information, wherein the third information comprises information about a third time difference, the third time difference comprises a time difference between receiving and sending at least two signals by at least one second network device, the at least two signals comprise any two signals that are transmitted between the terminal device and the at least one second network device in opposite directions at different times, transmission resources consumed by the at least two signals are fewer than the transmission resources consumed by the positioning reference signal PRS and the sounding reference signal SRS, and the at least one second network device is a network device corresponding to at least one second non-terrestrial device; and the determining, based on the first information and the second information, a first round trip time RTT corresponding to the terminal device comprises:

determining, based on the first information, the second information, and the third information, the first RTT corresponding to the terminal device.

7. A positioning method, comprising:

obtaining, by a terminal device, first information, wherein the first information comprises information about a first time difference, the first time difference comprises a time difference between receiving and sending at least two signals by the terminal device, the at least two signals comprise any two signals that are transmitted between the terminal device and a first network device in opposite directions at different times, transmission resources consumed by the at least two signals are fewer than transmission resources consumed by a positioning reference signal PRS and a sounding reference signal SRS, and the first network device is a network device corresponding to a first non-terrestrial device; and sending, by the terminal device, the first information, wherein the first information is for determining a first round trip time RTT corresponding to the terminal device, and the first RTT is for positioning the terminal device.

8. The method according to claim 7, wherein the first time difference satisfies at least one of the following: a time difference interval range corresponding to the first time difference is greater than a first interval range, and a time difference resolution corresponding to the first time difference is greater than a first threshold.

9. The method according to claim 7 or 8, wherein the first information further comprises at least one of the following: slot information corresponding to the at least two signals, and orbital height information corresponding to the first non-terrestrial device.

10. The method according to any one of claims 7 to 9, wherein the at least two signals comprise two or more of a first message Msg1, a second message Msg2, a third message Msg3, and a fourth message Msg4 in a four-step random access procedure; or the at least two signals comprise a first message MsgA and a second message MsgB in a two-step random access procedure.

11. The method according to any one of claims 7 to 9, wherein the at least two signals comprise a channel state information-reference signal CSI-RS and a feedback signal corresponding to the CSI-RS.

12. A communication apparatus, comprising:

    a processing unit, configured to obtain first information and second information by using a transceiver unit, wherein the first information comprises information about a first time difference, the first time difference comprises a time difference between receiving and sending at least two signals by a terminal device, the second information comprises information about a second time difference, the second time difference comprises a time difference between receiving and sending the at least two signals by a first network device, the at least two signals comprise any two signals that are transmitted between the terminal device and the first network device in opposite directions at different times, transmission resources consumed by the at least two signals are fewer than transmission resources consumed by a positioning reference signal PRS and a sounding reference signal SRS, and the first network device is a network device corresponding to a first non-terrestrial device, wherein
    the processing unit is further configured to determine, based on the first information and the second information, a first round trip time RTT corresponding to the terminal device; and
    the processing unit is further configured to position the terminal device based on the first RTT.

13. The apparatus according to claim 12, wherein the first time difference satisfies at least one of the following:
    a time difference interval range corresponding to the first time difference is greater than a first interval range, and a time difference resolution corresponding to the first time difference is greater than a first threshold.

14. The apparatus according to claim 12 or 13, wherein the first information further comprises at least one of the following:
    slot information corresponding to the at least two signals, and orbital height information corresponding to the first non-terrestrial device.

15. The apparatus according to any one of claims 12 to 14, wherein the at least two signals comprise two or more of a first message Msg1, a second message Msg2, a third message Msg3, and a fourth message Msg4 in a four-step random access procedure; or the at least two signals comprise a first message MsgA and a second message MsgB in a two-step random access procedure.

16. The apparatus according to any one of claims 12 to 14, wherein the at least two signals comprise a channel state information-reference signal CSI-RS and a feedback signal corresponding to the CSI-RS.

17. The apparatus according to any one of claims 12 to 16, wherein the processing unit is further configured to obtain third information by using the transceiver unit, wherein the third information comprises information about a third time difference, the third time difference comprises a time difference between receiving and sending at least two signals by at least one second network device, the at least two signals comprise any two signals that are transmitted between the terminal device and the at least one second network device in opposite directions at different times, transmission resources consumed by the at least two signals are fewer than the transmission resources consumed by the positioning reference signal PRS and the sounding reference signal SRS, and the at least one second network device is a network device corresponding to at least one second non-terrestrial device; and
    the processing unit is specifically configured to determine, based on the first information, the second information, and the third information, the first RTT corresponding to the terminal device.

18. A communication apparatus, comprising:

    a processing unit, configured to obtain first information, wherein the first information comprises information about a first time difference, the first time difference comprises a time difference between receiving and sending at least two signals by the communication apparatus, the at least two signals comprise any two signals that are transmitted between the communication apparatus and a first network device in opposite directions at different times, transmission resources consumed by the at least two signals are fewer than transmission resources consumed by a positioning reference signal PRS and a sounding reference signal SRS, and the first network device is a network device corresponding to a first non-terrestrial device; and
    a transceiver unit, configured to send the first information, wherein the first information is for determining a first round trip time RTT corresponding to the communication apparatus, and the first RTT is for positioning the communication apparatus.

19. The apparatus according to claim 18, wherein the first time difference satisfies at least one of the following:
    a time difference interval range corresponding to the first time difference is greater than a first interval range, and a time difference resolution corresponding to the first time difference is greater than a first threshold.

20. The apparatus according to claim 18 or 19, wherein the first information further comprises at least one of the following:
slot information corresponding to the at least two signals, and orbital height information corresponding to the first non-terrestrial device.

21. The apparatus according to any one of claims 18 to 20, wherein the at least two signals comprise two or more of a first message Msg1, a second message Msg2, a third message Msg3, and a fourth message Msg4 in a four-step random access procedure; or the at least two signals comprise a first message MsgA and a second message MsgB in a two-step random access procedure.

22. The apparatus according to any one of claims 18 to 20, wherein the at least two signals comprise a channel state information-reference signal CSI-RS and a feedback signal corresponding to the CSI-RS.

23. A communication apparatus, comprising a processor, wherein
when the processor invokes a computer program or instructions in a memory, the method according to any one of claims 1 to 6 or the method according to any one of claims 7 to 11 is performed.

24. A communication apparatus, comprising a logic circuit and an interface, wherein the logic circuit is coupled to the interface; and
the interface is configured to input to-be-processed data, the logic circuit processes the to-be-processed data according to the method according to any one of claims 1 to 6 or claims 7 to 11, to obtain processed data, and the interface is configured to output the processed data.

25. A computer-readable storage medium, wherein
the computer-readable storage medium is configured to store instructions or a computer program; and when the instructions or the computer program is executed, the method according to any one of claims 1 to 6 or the method according to any one of claims 7 to 11 is implemented.

26. A computer program product, comprising instructions or a computer program, wherein
when the instructions or the computer program is executed, the method according to any one of claims 1 to 6 or the method according to any one of claims 7 to 11 is performed.

27. A communication system, comprising the communication apparatus according to any one of claims 12 to 17, the communication apparatus according to any one of claims 18 to 22, the communication apparatus according to claim 23, or the communication apparatus according to claim 24.

28. A communication system, comprising a network device and a terminal device, wherein
the network device is configured to perform the method according to any one of claims 1 to 6, and the terminal device is configured to perform the method according to any one of claims 7 to 11.

FIG. 1A

FIG. 1B

FIG. 1C

FIG. 2A

FIG. 2B

FIG. 2C

```
Network          Terminal      First network
side device      device        device
    │               │              │
    │  S301: First information     │
    │◄──────────────│              │
    │  S302: Second information    │
    │◄─────────────────────────────│
    │               │              │
┌───┴──────────────────────────┐   │
│ S303: Determine, based on the│   │
│ first information and the    │   │
│ second information, a first  │   │
│ RTT corresponding to the     │   │
│ terminal device              │   │
└───┬──────────────────────────┘   │
┌───┴──────────────────────────┐   │
│ S304: Position the terminal  │   │
│ device based on the first RTT│   │
└───┬──────────────────────────┘   │
    │               │              │
```

FIG. 3

FIG. 4A

FIG. 4B

FIG. 5A

FIG. 5B

FIG. 6A

FIG. 6B

FIG. 7

FIG. 8

FIG. 9

## INTERNATIONAL SEARCH REPORT

| International application No. |
|---|
| **PCT/CN2023/090026** |

### A. CLASSIFICATION OF SUBJECT MATTER

H04W 64/00(2009.01)i

According to International Patent Classification (IPC) or to both national classification and IPC

### B. FIELDS SEARCHED

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, ENTXTC, DWPI, CNKI, IEEE, 3GPP: 定位, 发, 非地面, 非陆地, 时间差, 收, 卫星, 信号, 终端, NTN, RTT , CSI-RS, positioning, time difference, transmit, receive, satellite, signal, terminal

### C. DOCUMENTS CONSIDERED TO BE RELEVANT

| Category* | Citation of document, with indication, where appropriate, of the relevant passages | Relevant to claim No. |
|---|---|---|
| X | CN 111586832 A (CHENGDU HUAWEI TECHNOLOGIES CO., LTD.) 25 August 2020 (2020-08-25)<br>  description, paragraphs [0070]-[0264] | 1-28 |
| A | CN 112543503 A (HYTERA COMMUNICATIONS CO., LTD.) 23 March 2021 (2021-03-23)<br>  entire document | 1-28 |
| A | CN 114095855 A (HUAWEI TECHNOLOGIES CO., LTD.) 25 February 2022 (2022-02-25)<br>  entire document | 1-28 |
| A | CN 114142906 A (SPREADTRUM COMMUNICATIONS (SHANGHAI) CO., LTD.) 04 March 2022 (2022-03-04)<br>  entire document | 1-28 |
| A | WO 2022012549 A1 (HUAWEI TECHNOLOGIES CO., LTD.) 20 January 2022 (2022-01-20)<br>  entire document | 1-28 |

☑ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **18 May 2023** | **05 July 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 564 943 A1**

**INTERNATIONAL SEARCH REPORT**

International application No.

**PCT/CN2023/090026**

**C.    DOCUMENTS CONSIDERED TO BE RELEVANT**

| Category* | Citation of document, with indication, where appropriate, of the relevant passages | Relevant to claim No. |
|---|---|---|
| A | ERICSSON. ""R3-223290 QoE Rel-17 Corrections""<br>*3GPP*, 26 April 2022 (2022-04-26),<br>entire document | 1-28 |

## INTERNATIONAL SEARCH REPORT
### Information on patent family members

International application No.

**PCT/CN2023/090026**

| Patent document cited in search report | | | Publication date (day/month/year) | Patent family member(s) | | | Publication date (day/month/year) |
|---|---|---|---|---|---|---|---|
| CN | 111586832 | A | 25 August 2020 | EP | 3923643 | A1 | 15 December 2021 |
| | | | | US | 2021373148 | A1 | 02 December 2021 |
| | | | | CN | 114567928 | A | 31 May 2022 |
| | | | | WO | 2020164512 | A1 | 20 August 2020 |
| | | | | JP | 2022520265 | W | 29 March 2022 |
| CN | 112543503 | A | 23 March 2021 | None | | | |
| CN | 114095855 | A | 25 February 2022 | None | | | |
| CN | 114142906 | A | 04 March 2022 | None | | | |
| WO | 2022012549 | A1 | 20 January 2022 | CN | 113950068 | A | 18 January 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210901714